# EUROPÄISCHE PATENTSCHRIFT

(11) **EP 3 208 782 B1**
(45) Veröffentlichungstag und Bekanntmachung des Hinweises auf die Patenterteilung: **19.10.2022**
(21) Anmeldenummer: 16156685.6
(22) Anmeldetag: 22.02.2016
(51) Int. Cl.: G07F 7/06

(54) **LEERGUTRÜCKNAHMEVORRICHTUNG**
EMPTIES RETURNING DEVICE
DISPOSITIF DE REPRISE POUR BOUTEILLES CONSIGNEES

(43) Veröffentlichungstag der Anmeldung: 23.08.2017
(73) Patentinhaber: Wincor Nixdorf International GmbH, 33106 Paderborn (DE)
(72) Erfinder: HARTUNG, Domenic, 99192 Molsdorf (DE)
(74) Vertreter: Viering, Jentschura & Partner mbB Patent- und Rechtsanwälte

(56) Entgegenhaltungen:
- EP-A1- 2 538 392
- EP-A2- 2 256 701
- WO-A1-2009/021515
- DE-A1- 19 508 388
- US-A- 5 237 404
- US-A- 6 137 900
- US-A1- 2010 290 767
- US-A1- 2014 218 510

## Beschreibung

Die vorliegende Offenbarung betrifft eine Leergutrücknahmevorrichtung.

Eine Leergutrücknahmevorrichtung wird beispielsweise in Kaufhäusern eingesetzt, um Kunden die Rückgabe von Flaschen und Dosen mit möglichst wenig Personalaufwand zu ermöglichen. Ein Leergutbehälter kann mit einem Pfandwert assoziiert sein. Der Leergutbehälter oder dessen Sorte ist hierfür korrekt zu erkennen und zu erfassen.

Es sind Leergutrücknahmevorrichtungen bekannt, bei denen das Erfassen und das Erkennen eines Leergutbehälters beispielsweise mittels eines Barcodescanners erfolgt. Der Leergutbehälter wird mittels einer Rotationsvorrichtung einer Transporteinrichtung solange gedreht (entlang seiner Längsachse), bis ein auf dem Leergutbehälter befindlicher Barcode von dem Barcodescanner gelesen werden kann. Dieser Rotationsvorgang kann, insbesondere bei vielen Leergutbehältern, zeitintensiv sein. Ferner kann, beispielsweise aufgrund einer verschmutzten Rotationsvorrichtung, der Leergutbehälter verschmutzt werden und nicht mehr oder nicht mehr korrekt zu erfassen sein.

Ferner kann eine herkömmliche Leergutrücknahmevorrichtung, welche beispielsweise in Kaufhäusern viele Stunden am Tag vollständig aktiv ist, einen entsprechend hohen Stromverbrauch aufweisen.

Das Erkennen und Erfassen eines Leergutbehälters sollte sicherstellen, dass der eingeführte Leergutbehälter ordnungsgemäß gezählt wird und beispielsweise nicht missbräuchlich nach der Erfassung wieder entnommen und nochmals eingeführt werden kann.

EP 2 538 392 A1 beschreibt einen Rücknahmeautomaten, welcher mehrere Module aufweist, wobei jedes Modul eine Kamera und eine Lichtquelle aufweist. In einer ersten Konfiguration ist jedes Modul oberhalb des zu erfassenden Bereichs angeordnet, wobei der Strahlengang sowohl der Lichtquelle als auch der Kamera jedes Moduls im Wesentlichen in dieselbe Richtung auf den Erfassungsbereich gerichtet ist. In einer zweiten Konfiguration sind mehrere Module um eine Öffnung herum angeordnet, durch welche der Leergutbehälter in den Erfassungsbereich eingeführt werden soll.

US 6 137 900 A beschreibt einen Rücknahmeautomaten, welcher im Inneren mehrere Sensoren und eine Lichtquelle aufweist. Der Eingangsbereich des Rücknahmeautomaten wird mittels einer Kamera erfasst.

EP 2 256 701 A2 beschreibt einen Rücknahmeautomaten, welcher zum Durchleuchten eines Leergutobjekts eingerichtet ist. Die von der Lichtquelle emittierte Strahlung soll das Leergutobjekt durchdringen und/oder davon reflektiert werden sowie das daraus resultierende Spektrum mittels eines Detektors erfasst und anschließend mittels einer Ansteuer- und Auswerteeinrichtung ausgewertet werden.

Es beschreiben US 2014/218510 A1, US 2010/290767 A1 und DE 195 08 388 A1 jeweils Leergutautomaten und WO 2009/021515 A1 eine Sortiermaschine.

Die sich daraus ergebende Aufgabe wird gelöst von dem Gegenstand gemäß dem unabhängigen Patentanspruch 1.

Anschaulich wird in verschiedenen Ausführungsbeispielen eine Leergutrücknahmevorrichtung bereitgestellt, welche eine Einrichtung zum optischen Erfassen von ein oder mehreren Merkmalen eines Leergutbehälters aufweist. Dazu werden mehrere Kameras und mehrere Lichtquellen entlang einer Hufeisenform angeordnet, wobei diese um einen Erfassungsbereich angeordnet sind, in welchem ein Leergutbehälter erkannt und ein oder mehrere Merkmale des Leergutbehälters erfasst werden können. Die Anordnung in Form eines Hufeisens ermöglicht es, dass der Leergutbehälter in einem Abschnitt der Oberfläche des Leergutbehälters rund um gleichzeitig nach ein oder mehreren Merkmalen untersucht werden kann, so dass keine Rotation des Leergutbehälters notwendig ist. Die Öffnung der Hufeisenform ist im Wesentlichen in Richtung des Bodens der Leergutrücknahmevorrichtung ausgerichtet. Die mehreren Lichtquellen heben das allgemeine Beleuchtungsniveau für die Kameras und zumindest eine Lichtquelle der mehreren Lichtquellen wirkt auch zusammen mit zumindest einer Kamera der mehreren Kameras und einem Schaltkreis als ein optischer Sensor, welcher die Präsenz eines Leergutbehälters erkennen kann. Der Schaltkreis ist derart eingerichtet, dass, falls die Präsenz eines Leergutbehälters (beispielsweise wenn die mittels der Kamera empfangene Lichtmenge geringer ist als ein vorgegebener Schwellenwert) erkannt wird, die restlichen der mehreren Kameras und/oder mehreren Lichtquellen zumindest teilweise aktiviert werden. Ferner kann die Leergutrücknahmevorrichtung einen Prozessor aufweisen, welcher eingerichtet ist, die Merkmale des Leergutbehälters zu ermitteln, beispielsweise optische Merkmale, die mittels der Kameras erfasst worden sind und von diesen an den Prozessor übermittelt worden ist.

Die Leergutrücknahmevorrichtung gemäß dem Patentanspruch 1 weist unter anderem eine optische Erfassungseinrichtung zum optischen Erfassen von Merkmalen eines Leergutbehälters auf, wobei die Erfassungseinrichtung aufweisen kann: mehrere Lichtquellen und mehrere Kameras; wobei die mehreren Lichtquellen und die mehreren Kameras hufeisenförmig um einen Erfassungsbereich herum angeordnet sein können, in den der Leergutbehälter zum optischen Erfassen der Merkmale gebracht werden kann; wobei mindestens eine der mehreren Lichtquellen und mindestens eine der mehreren Kameras derart angeordnet sein können, dass die mindestens eine Kamera im Strahlengang der mindestens einen Lichtquelle angeordnet sein kann, so dass, wenn ein Leergutbehälter in den Erfassungsbereich gebracht ist, die mindestens eine Kamera eine veränderte Lichtmenge von der mindestens einen Lichtquelle erfassen kann als in dem Fall, dass der Erfassungsbereich frei ist von dem Leergutbehälter. Die Leergutrücknahmevorrichtung gemäß dem Patentanspruch 1 weist unter anderem ferner einen Schaltkreis auf, der mit den mehreren Kameras verbunden und eingerichtet sein kann, basierend auf der mittels der mindestens einen Kamera erfassten Lichtmenge, mindestens eine zusätzliche Kamera der mehreren Kameras und/oder mindestens eine zusätzliche Lichtquelle der mehreren Lichtquellen zu aktivieren.

Die Leergutrücknahmevorrichtung kann beispielsweise ein Automat sein, welcher Leergutbehälter mit geringem Personalaufwand erkennt und erfasst und entgegennimmt und beispielsweise einen Pfandbeleg basierend auf einem ermittelten Pfandwert des Leergutbehälters eines oder mehrerer Leergutbehälter einem Benutzer ausgibt. Beispielsweise kann ein Leergutbehälter in einen Erfassungsbereich der Leergutrücknahmevorrichtung eingeführt werden. Sobald die Anwesenheit des Leergutbehälters erkannt wird, kann die Leergutrücknahmevorrichtung, beispielsweise die Erfassungseinrichtung, eingerichtet sein, die Merkmale des Leergutbehälters zu erfassen. Falls der Leergutbehälter (bzw. dessen Typ, Gruppe oder Kategorie) als zu einer Rücknahme vorhergesehenen Leergutbehälter erkannt wird, kann der Leergutbehälter beispielsweise in ein Lager mittels einer Transporteinrichtung der Leergutrücknahmevorrichtung transportiert werden, beispielsweise zu einem Flaschentisch oder auch einem Kompaktor.

Die Leergutrücknahmevorrichtung kann beispielsweise eine Transporteinrichtung mit einem oder mehreren Transportbändern enthalten, welche ein oder mehrere Leergutbehälter innerhalb der Leergutrücknahmevorrichtung transportieren können.

Die Leergutrücknahmevorrichtung kann eingerichtet sein, ein oder mehrere nacheinander eingegebene und in seinem Typ, Gruppe oder Kategorie ermittelten und akzeptierten Leergutbehälter zu zählen und darauf basierend beispielsweise die jeweiligen Pfandwerte, wobei ein Pfandwert jeweils mit einem jeweiligen Leergutbehälter assoziiert sein kann, zu addieren und beispielsweise auf Verlangen eines Benutzers einen Pfandbeleg auszudrucken.

Die Leergutrücknahmevorrichtung kann beispielsweise mit einem Computer, einem Netzwerk oder sonstigen ein oder mehreren Prozessoren außerhalb der Leergutrücknahmevorrichtung verbunden sein, welche es ermöglichen den Status der Leergutrücknahmevorrichtung zu überwachen.

Ein Leergutbehälter kann beispielsweise eine Flasche, eine Dose oder ein sonstiges Gebinde sein. Dieser kann beispielsweise für den Transport von Wasser, Limonade, Saft, Wein oder Bier eingerichtet sein. Ein Leergutbehälter kann beispielsweise aus Metall, Kunststoff oder Glas bestehen. Mit dem Typ, Sorte, Gruppe und Kategorie (jeweils eventuell mit mehreren Untersorten, Untergruppen und Unterkategorien) eines Leergutbehälters kann verstanden werden, dass der Leergutbehälter beispielsweise nach Eigenschaften und Merkmalen wie Art, Material, Größe, Form, (ehemaliger) Inhalt, Hersteller, Marke, Menge an Restflüssigkeit, Verschmutzungsgrad, Grad einer Beschädigung, Identität oder Identität einer Gruppe oder weiteren Eigenschaften erfasst und eingeteilt werden kann.

Ein Leergutbehälter kann verschiedene, d.h. ein oder mehrere, Merkmale aufweisen. Ein Merkmal kann als Verknüpfung von mehreren Merkmalen vorliegen. Merkmale können optische Merkmale sein, die beispielsweise auf dem Leergutbehälter aufgedruckt und/oder in den Leergutbehälter eingebracht sein können, beispielsweise in Form einer Stanzung oder Vertiefung. Weitere Beispiele für Merkmale oder Träger von Merkmalen sind ein oder mehrere Barcodes, QR-Codes und Etiketten.

Die Erfassungseinrichtung kann eingerichtet sein, die Präsenz eines Leergutbehälters zu erkennen und ein oder mehrere Merkmale (beispielsweise optische Merkmale) des Leergutbehälters zu erfassen. Mittels der erfassten Merkmale kann der Typ des Leergutbehälters und/oder dessen Gruppe, Sorte, Identität oder Kategorie ermittelt werden. Mittels eines Abgleichs von in einer Datenbank (die Datenbank kann teilweise oder vollständig Teil der Leergutrücknahmevorrichtung sein oder teilweise oder vollständig entfernt von der Leergutrücknahmevorrichtung und mit dieser mittels eines oder mehrerer Kommunikationsnetzwerke (drahtlos oder drahtgebunden) gekoppelt vorgesehen sein) gespeicherten ein oder mehreren Merkmalen mit den erfassten ein oder mehreren Merkmalen des Leergutbehälters kann der Leergutbehälter, abhängig von dem Ergebnis des Abgleichs, akzeptiert oder nicht akzeptiert werden.

Eine oder mehrere Lichtquellen der mehreren Lichtquellen kann/können mehrere Unterlichtquellen aufweisen oder sein. Beispielsweise kann eine Lichtquelle mehrere Leuchtdioden aufweisen. Die mehreren Lichtquellen/Unterlichtquellen können, voneinander verschieden sein, wobei mehrere Lichtquellen/Unterlichtquellen zu einzelnen Gruppen gruppiert sein können, beispielsweise in Gruppen, die insgesamt eine vorgegebene Lichtmenge und/oder Lichtfarbe liefern.

Beispielweise können die mehreren Lichtquellen/Unterlichtquellen eingerichtet sein, Licht in verschiedenen Spektralbereichen zu emittieren. Mehrere verschiedenen Lichtquellen/Unterlichtquellen können beispielsweise unabhängig voneinander gesteuert oder geregelt sein. Das Steuern oder Regeln kann beispielsweise mittels einer Schaltung und/oder einem Prozessor erfolgen. Beispielsweise können die mehreren Kameras als optischer Sensor fungieren, um Daten für das Steuern oder Regeln zu liefern.

Eine oder mehrere Lichtquellen/Unterlichtquellen können mehrere verschiedene Funktionen erfüllen. Beispielweise kann das Beleuchtungsniveau in dem Erfassungsbereich erhöht werden, was es den mehreren Kameras ermöglichen kann, ein oder mehrere Merkmale eines Leergutbehälters zu erfassen. Beispielsweise kann ein gewünschtes Kontrastverhältnis für die von den mehreren Kameras erfassten Bilder realisiert werden. Ferner kann mittels mit zumindest einer Kamera der mehreren Kameras und zumindest einer Lichtquelle/Unterlichtquelle und dem Schaltkreis ein optischer Sensor bereitgestellt werden, um die Präsenz eines Leergutbehälters zu erfassen.

Die mehreren Lichtquellen/Unterlichtquellen können dazu eingerichtet sein, Licht in verschiedenen Spektralbereichen zu emittieren. Beispielsweise kann eine Lichtquelle/Unterlichtquelle eingerichtet sein, sichtbares Licht, infrarotes Licht oder ultraviolettes Licht zu emittieren. Beispielsweise kann das Erfassen eines Merkmals eines Leergutbehälters mittels Lichts eines solchen Spektralbereichs ermöglicht werden. Die mehreren Kameras können entsprechend eingerichtet sein, diese Spektralbereiche zumindest teilweise zu erfassen.

Eine oder mehrere Lichtquellen/Unterlichtquellen können derart angesteuert werden gepulstes Licht zu erzeugen (beispielswiese kann der Schaltkreis eingerichtet sein, die eine oder mehreren Lichtquellen/Unterlichtquellen derart anzusteuern, dass sie gepulstes Licht erzeugen). Beispielsweise kann die Dauer eines Pulses ungefähr 0,1 ms bis 10 ms, beispielsweise 0,5 ms bis 5 ms, beispielsweise ungefähr 1 ms, betragen. Der zeitliche Abstand der Pulse zueinander kann beispielsweise 1 ms bis 1000 ms, beispielsweise 5 ms bis 100 ms, betragen. Anschaulich können die Pulse als "Blitzlicht" für die mehreren Kameras zu der Aufnahme jeweils eines Bildes fungieren. Der Pulsbetrieb kann gegenüber einem dauerhaften, nicht gepulsten Betrieb den Vorteil eines geringeren Stromverbrauchs bieten. Ein geringerer Stromverbrauch kann beispielsweise bedeuten, dass weniger Abwärme produziert wird und somit weniger Aufwand für eine Kühlung/Lüftung einer Leergutrücknahmevorrichtung notwendig sein kann. Ferner kann beispielsweise mittels der zeitlichen Abstände der Pulse zueinander und beispielsweise zugeordneten Aufnahmen von Bilder mittels der mehreren Kameras die Anzahl der entstehenden Bilder, der Stromverbrauch, Wartungsfreundlichkeit (beispielsweise aufgrund von Verschleiß einer Lichtquelle und weitere Faktoren beeinflusst werden.

Die mehreren Lichtquellen/Unterlichtquellen können ein oder mehrere optische Bauelemente, wie beispielsweise Fenster, Diffusoren, Reflektoren, Linsen oder Spiegel, aufweisen. Dadurch kann Licht diffus, beispielsweise zum Erhöhen des Beleuchtungsniveaus in dem Erfassungsbereich, und/oder gerichtet, beispielsweise für das Erkennen der Präsenz eines Leergutbehälters, emittiert werden.

Eine oder mehrere Kameras der mehreren Kameras kann beispielsweise zum Erfassen eines oder mehrerer Einzelbilder und/oder eines oder mehrerer Videobilder eingerichtet sein. Die mehreren Kameras können voneinander verschieden sein. Eine Kamera kann beispielsweise für ein Erfassen von Bildern in Farbe, Graustufen oder in Schwarz-Weiß oder auch Infrarot, oder Kombinationen davon, eingerichtet sein. Eine Kamera kann ein oder mehrere Schaltungen, beispielsweise eine Schaltung für eine Auto-Fokussierung, aufweisen. Beispielsweise kann eine zusätzliche Schaltung eingerichtet sein, erfasste Bilddaten vorzuverarbeiten und/oder Bilddaten zwischen zu speichern. Ferner kann eine Kamera optische Bauelemente, wie beispielsweise Fenster, Spiegel oder Linsensysteme aufweisen, um beispielsweise eine Fokusebene einzustellen.

Es können mindestens zwei Kameras vorhanden sein, um zumindest einen Teilbereich einer Oberfläche eines Leergutbehälters zu erfassen. Mehr als zwei Kameras können entlang des Umfangs des Erfassungsbereichs, d.h. entlang der Hufeisenform derart angeordnet sein, so dass sich die jeweiligen Aufnahmebereiche der Kameras überlappen, womit es möglich wird, durch Zusammenfügen von Bildern mehrerer Kameras einen größeren Bereich der Oberfläche des Leergutbehälters aufzunehmen und dann auch verarbeiten zu können als dies mit einer einzelnen oder auch zwei einander gegenüberliegenden Kameras möglich wäre.

Eine Kamera kann Teil eines Kamerasystems sein, welches beispielsweise ein oder mehrere reflektierende Oberflächen, beispielsweise einen Spiegel oder eine reflektierende Folie, aufweisen kann. Mittels einer oder mehrerer reflektierender Oberflächen kann der Strahlengang hin zu der Kamera bzw. der Aufnahmebereich der Kamera derart verändert werden, dass die Fokusebene der Kamera verlagert wird und so der räumliche Abstand zwischen der Kamera und dem aufzunehmenden Objekt, beispielsweise einem Leergutbehälter, verkürzt werden kann. Beispielsweise können verschiedene Kameras Teil von verschiedenen Kamerasystemen sein. Beispielsweise können mehrere Kameras entlang einer hufeisenförmigen Erfassungseinrichtung abhängig von dem Abstand zu einem Erfassungsbereich Teil von verschiedenen Kamerasystemen sein. Ferner können die Kamerasysteme Halterungen für eine oder mehrere Kameras aufweisen, welche eingerichtet sein können, die Position der einen oder mehreren Kameras zu verändern, um beispielsweise den Aufnahmebereich beziehungsweise die Fokusebene der einen oder mehreren Kameras einzustellen oder zu justieren.

Die mehreren Kameras können mit einem Prozessor gekoppelt sein und eingerichtet sein, ein erfasstes Einzelbild/erfasste Videobilder diesem Prozessor bereitzustellen. Die von dem Prozessor empfangenen Daten einer oder mehrerer Kameras können sowohl Bilddaten als auch beispielsweise weitere Informationen, beispielsweise Daten zur Identifizierung einer jeweiligen Kamera und/oder eine Zeitangabe über beispielsweise eine erfolgte Aufnahme eines oder mehrerer Bilder, enthalten.

Eine Kamera der mehreren Kameras und eine Lichtquelle der mehreren Lichtquellen können jeweils paarweise einander zugeordnet sein. Paarweise in diesem Sinne umfasst auch Ausgestaltungen, in denen eine Lichtquelle mehreren Kameras und/oder eine Kamera mehreren Lichtquellen zugeordnet ist. Diese Zuordnung kann derart sein, dass der Strahlengang zwischen ein oder mehreren Lichtquellen zu einer der mehreren Kameras aufgrund eines in den Erfassungsbereich eingeführten Leergutbehälters verändert wird und auf eine Kamera eine geänderte Lichtmenge von einer oder mehreren Lichtquellen/Unterlichtquellen auftrifft. Der Strahlengang kann beispielsweise dadurch verändert werden, dass das Licht zumindest teilweise von dem Leergutbehälter abgeblockt wird, oder dass aufgrund von Reflexion an einem Leergutbehälter eine Kamera mehr Licht empfängt. Zwischen den mehreren Lichtquellen und den mehreren Kameras kann/können ein oder mehrere Spiegel- und/oder Linsensysteme angeordnet sein und den Strahlengang definieren.

Beispielsweise kann eine oder können mehrere Kameras Teil eines oder mehrerer Kamerasysteme mit reflektierenden Oberflächen sein. Eine oder mehrere Lichtquellen können derart eingerichtet sein, dass Licht von der einen oder den mehreren Lichtquellen zu der reflektierenden Oberfläche ausgesendet von dort zu einer Kamera reflektiert wird. Somit kann beispielsweise Licht von einer Lichtquelle zweimal oder mehrmals den Erfassungsbereich einer Leergutrücknahmevorrichtung passieren, bis es von einer Kamera empfangen wird. Dies kann beispielsweise vorteilhaft sein, falls ein Leergutbehälter nahezu transparent (beispielsweise mit einer Transmission grösser als 90%) ist, da mehrere Durchgänge von Licht durch den Leergutbehälter hindurch eine erhöhte Veränderung der Lichtmenge und somit ein deutlicheres Signal für die Präsenz des Leergutbehälters in dem Erfassungsbereich liefert. Ferner kann mit mehreren voneinander unterschiedlichen, beispielsweise räumlich versetzten, Durchgängen von Licht durch einen Erfassungsbereich hindurch beispielsweise ein größeres Volumen des Erfassungsbereichs durchleuchtet werden. Somit kann beispielsweise die Präsenz eines gegenüber dem Volumen des Erfassungsbereichs kleinerer Leergutbehälter mit nur einer oder wenigen Lichtquellen erkannt werden.

Die hufeisenförmige Anordnung der mehreren Lichtquellen und der mehreren Kameras kann derart sein, dass ein Abschnitt der Oberfläche eines Leergutbehälters in dem Erfassungsbereich, welcher beispielsweise 360° rund um die Oberfläche des Leergutbehälters führt, zeitgleich vollständig erfasst werden kann. Zu diesem Zweck kann zwischen der Erfassungseinrichtung und anderen Elementen der Leergutrücknahmevorrichtung, beispielsweise dem Transportsystem, ein Abstand vorgesehen sein, so dass die mehreren Lichtquellen und die mehreren Kameras zumindest abschnittsweise die Oberfläche des Leergutbehälters beleuchten beziehungsweise erfassen können.

Die hufeisenförmige Anordnung kann dabei beispielsweise u-förmig, v-förmig oder beispielsweise einem unterbrochenen Kreis entsprechen. Die Öffnung der Hufeisenform kann im Wesentlichen in Richtung des Bodens der Leergutrücknahmevorrichtung ausgerichtet sein. Die Öffnung der Hufeisenform, beispielsweise realisiert als Unterbrechung einer Kreisform, kann dazu dienen anderen Elementen, wie beispielsweise einem Transportsystem, Platz zu bieten. Weiterhin wird durch diese Anordnung verhindert, dass noch in den Leergutbehältern enthaltene Restflüssigkeiten oder andere Verschmutzungen der Leergutbehälter auf eine Kamera oder eine Lichtquelle fallen und diese verschmutzen.

Ein Prozessor kann eingerichtet sein, aufgenommene Bilder von einer oder mehreren Kameras zu empfangen und verarbeiten. Dabei kann der Prozessor eingerichtet sein, die aufgenommenen Bilder von mehreren Kameras zu einem Gesamt-Bild zusammenzusetzen. Der Prozessor kann beispielsweise Teil eines Computers oder mehreren vernetzen Computern sein.

Der Prozessor kann beispielsweise mittels Hardware und Software, beispielsweise mittels eines Videospeichers, einer GPU (engl. Graphics Processing Unit, Grafikprozessoreinheit), Bilderkennungs- und Bildbearbeitungsprogrammen, eingerichtet sein, die ein oder mehrere Merkmale eines Leergutbehälters zu ermitteln. Der Prozessor kann eingerichtet sein, die ein oder mehreren erfassten Merkmale mit in einem Speicher (beispielsweise einer Datenbank) gespeicherten Merkmalen abzugleichen. In der Datenbank kann für unterschiedliche Typen von Leergutbehältern der oder die diesen jeweiligen Typen charakterisierenden (beispielsweise optischen) Merkmale gespeichert sein. Weiterhin kann in der Datenbank zu dem jeweiligen Typ von Leergutbehälter gespeichert sein, ob dieser Typ von Leergutbehälter für die jeweilige Leergutrücknahmevorrichtung akzeptiert werden soll oder nicht. Es kann aber auch vorgesehen sein, dass für den Fall, dass der Prozessor zu den ermittelten optischen Merkmalen überhaupt keinen Typ von Leergutbehälter findet, der eingegebene Leergutbehälter von der Leergutrücknahmevorrichtung nicht akzeptiert wird. Anders ausgedrückt, abhängig von dem Ergebnis des Abgleichs kann der Leergutbehälter von der Leergutrücknahmevorrichtung akzeptiert oder nicht akzeptiert werden und der Prozessor kann eingerichtet sein, diese Information anderen Teilen der Leergutrücknahmevorrichtung bereitzustellen oder diese entsprechend zu steuern, beispielsweise eine Transportvorrichtung zu dem Transport des Leergutbehälters (beispielsweise kann die Transportvorrichtung derart angesteuert werden, dass der eingegebene Leergutbehälter zu dem Nutzer zurücktransportiert wird und ihm wieder ausgegeben wird).

Der Prozessor kann aktiviert oder deaktiviert werden. Beispielsweise kann der Prozessor mit einer oder mehreren Kameras und/oder mit einer oder mehreren Lichtquellen mittels des Schaltkreises aktiviert oder deaktiviert werden. Unter einem aktivierten oder deaktivierten Prozessor kann verstanden werden, dass der Prozessor in der Lage (aktiviert) oder nicht in der Lage (nicht aktiviert) ist, das Ermitteln von ein oder mehreren Merkmalen eines Leergutbehälters vorzunehmen (anders ausgedrückt, eine Bildverarbeitung von ihm von den Kameras zugeführten Bildern durchzuführen oder sogar überhaupt die Bilder zu empfangen). Aktivieren und Deaktivieren kann beispielsweise bedeuten, dass der Prozessor oder Teile des Prozessors ein- oder ausgeschaltet werden oder dass der Prozessor oder Teile des Prozessors in einen Schlafmodus, wie beispielsweise einen Stand-by-Modus, versetzt werden. Ferner kann es bedeuten, dass eine auf dem Prozessor laufende Software ausgeführt oder gestoppt wird. In den Zeiten in denen der Prozessor deaktiviert ist, kann der Stromverbrauch des Prozessors und somit der gesamten Leergutrücknahmevorrichtung gesenkt sein. Beispielsweise können nur die ein oder mehreren Teile des Prozessors deaktiviert werden, welche zu dem Erfassen eines Leergutbehälters eingerichtet sind, während beispielsweise ein Datenaustausch mit anderen Systemen bestehen oder möglich bleiben kann.

Der Schaltkreis kann Teil des Prozessors, Teil der Erfassungseinrichtung oder ein eigenständiges Element sein. Der Schaltkreis kann eingerichtet sein eine oder mehrere Kameras und/oder eine oder mehrere Lichtquellen zu aktivieren oder zu deaktivieren. Der Schaltkreis kann eingerichtet sein, ein Pulsen (beispielsweise Dauer, Form und Zeitspanne zwischen den Pulsen) für ein oder mehrere Lichtquellen und/oder Zeitspannen zwischen der Aufnahme von Einzelbildern von einer oder mehrerer Kameras vorzugeben. Der Schaltkreis kann eingerichtet sein, den Prozessor oder einen Teil des Prozessors zu aktivieren oder zu deaktivieren. Der Schaltkreis zusammen mit zumindest einer Kamera und zumindest einer Lichtquelle/Unterlichtquelle kann einen optischen Sensor für das Erkennen der Präsenz eines Leergutbehälters darstellen.

Gemäß verschiedenen Ausführungsbeispielen kann die Leergutrücknahmevorrichtung ferner einen Prozessor zum Verarbeiten von mittels der mehreren Kameras erfassten Bildsignalen aufweisen.

Gemäß verschiedenen Ausführungsbeispielen kann die Leergutrücknahmevorrichtung eingerichtet sein, den Prozessor basierend auf der mittels der mehreren Kameras erfassten Lichtmenge zu aktivieren.

Gemäß verschiedenen Ausführungsbeispielen können die mehreren Kameras zum Erfassen eines Abschnitts eingerichtet sein, der einen vollständigen durchgängigen 360°-Ringbereich der Oberfläche des Leergutbehälters aufweist.

Die mehreren Kameras können derart angeordnet sein, dass der Abschnitt der Oberfläche zeitgleich mittels der mehreren Kameras erfasst werden kann. Die Bildbereiche, d.h. die von den Kameras räumlich erfassbaren Bilder, der mehreren Kameras können sich zumindest teilweise überlagern, so dass eine Redundanz gegeben ist, mittels der beispielsweise Pixelfehler der Kameras, Verschmutzung der Optik oder sonstige Fehler und Fehlfunktionen ausgeglichen werden können.

Gemäß verschiedenen Ausführungsbeispielen kann zumindest eine der mehreren Lichtquellen mehrere Unterlichtquellen aufweisen.

Gemäß verschiedenen Ausführungsbeispielen können zumindest eine der mehreren Lichtquellen oder eine oder mehrere Unterlichtquellen eingerichtet sein, Licht in verschiedenen Spektralbereichen zu emittieren.

Die verschiedenen Spektralbereiche können verschiedenen Funktionen zugeordnet sein. Beispielsweise kann ein erster Spektralbereich zum Erkennen eines ersten Merkmals eines Leergutbehälters verwendet werden und ein zweiter Spektralbereich kann zum Erkennen eines zweiten Merkmals des Leergutbehälters verwendet werden. Beispielsweise kann weißes Licht benutzt werden, um das Beleuchtungsniveau innerhalb des Erfassungsbereichs zu erhöhen. Ultraviolettes Licht kann beispielsweise auch zur Desinfektion benutzt werden.

Gemäß verschiedenen Ausführungsbeispielen kann der Schaltkreis und/oder ein Prozessor eingerichtet sein, einen Teil der mehreren Lichtquellen und/oder ein Teil der mehreren Unterlichtquellen zu steuern oder zu regeln.

Beispielsweise kann ein Teil der mehreren Lichtquellen/Unterlichtquellen, welcher nicht zur Detektion der Präsenz eines Leergutbehälters benötigt wird, während der Abwesenheit eines Leergutbehälters deaktiviert sein, um den Stromverbrauch der Leergutrücknahmevorrichtung zu senken. Bei der Detektion der Präsenz eines Leergutbehälters kann dieser Teil der mehreren Lichtquellen/Unterlichtquellen aktiviert werden, um ein gewünschtes Beleuchtungsniveau zu schaffen. Beispielsweise kann auch die Pulsdauer oder Pulsfrequenz einer oder mehrerer Lichtquellen angepasst werden.

Gemäß verschiedenen Ausführungsbeispielen kann die Leergutrücknahmevorrichtung ferner zumindest ein Spiegelsystem zum Verlagern der Fokusebene von zumindest einer Kamera der mehreren Kameras aufweisen.

Mittels des Verlagerns der Fokusebene einer oder mehrerer Kameras mittels eines oder mehrerer Spiegel/Spiegelsysteme kann ein größerer Freiheitsgrad in der Wahl der Position der mehreren Kameras und der mehreren Lichtquellen gewonnen werden. Beispielsweise ist dadurch ein kompakterer Aufbau der Leergutrücknahmevorrichtung möglich.

Gemäß verschiedenen Ausführungsbeispielen kann der Prozessor eingerichtet sein, erfasste Bilder der mehreren Kameras zu einem Gesamt-Bild zusammenzufügen.

Beispielsweise kann ein auf einem Leergutbehälter befindlicher Barcode zu einem Teil von einer Kamera und zu einem anderen Teil von einer anderen Kamera erfasst werden und erst in einem zusammengefügten Gesamt-Bild zu dem vollständigen Barcode rekonstruiert werden.

Gemäß verschiedenen Ausführungsbeispielen weist eine Leergutrücknahmevorrichtung ferner ein Transportsystem zum Transportieren eines Leergutbehälters auf, wobei das Transportsystem und die Erfassungseinrichtung voneinander beabstandet sind.

Der Abstand, beispielsweise in Form eines Spaltes zwischen dem Transportsystem und der Erfassungseinrichtung, kann dazu dienen, dass die mehreren Kameras die Oberfläche eines Leergutbehälters zumindest abschnittsweise rundum erfassen können, und dass das Transportsystem nicht die "Sicht" einer Kamera auf den Leergutbehälter blockiert.

Gemäß verschiedenen Ausführungsbeispielen kann die Leergutrücknahmevorrichtung eingerichtet sein, die mindestens eine zusätzliche Kamera der mehreren Kameras und/oder die mindestens eine zusätzliche Lichtquelle der mehreren Lichtquellen mit einer Zeitverzögerung zu aktivieren.

Der Schalkreis kann beispielsweise eingerichtet sein, bei einem Verändern der von einer Kamera erfassten Lichtmenge, eine festgesetzte Zeitdauer zu warten und zu prüfen, ob die Lichtmenge im Wesentlichen für eine Zeitspanne konstant bleibt, so dass mögliche Fehlaktivierungen der mindestens einen zusätzlichen Kamera der mehreren Kameras und/oder der mindestens einen zusätzlichen Lichtquelle der mehreren Lichtquellen und/oder eines Prozessors vermieden werden können.

Gemäß verschiedenen Ausführungsbeispielen kann die Leergutrücknahmevorrichtung derart eingerichtet sein, dass ein Leergutbehälter dann zurück genommen wird, falls die veränderte Lichtmenge zumindest dauerhaft während des Erfassens der Merkmale des Leergutbehälters detektiert wird.

Somit kann sichergestellt werden, dass der Leergutbehälter in der Leergutrücknahmevorrichtung verbleibt und nicht, beispielsweise aufgrund von missbräuchlichem Verhalten eines Nutzers, entfernt und wieder eingeführt und somit doppelt gezählt wird.

Gemäß verschiedenen Ausführungsbeispielen kann mindestens eine Lichtquelle der mehreren Lichtquellen angesteuert werden, Licht in Form von Pulsen auszusenden (beispielsweise kann der Schaltkreis eingerichtet sein, die Lichtquelle der mehreren Lichtquellen zum emittieren von Lichtpulsen anzusteuern).

Gemäß verschiedenen Ausführungsbeispielen kann die Leergutrücknahmevorrichtung ferner zumindest eine reflektierende Oberfläche aufweisen, welche derart eingerichtet ist, dass Licht von mindestens einer Lichtquelle zumindest zweimal den Erfassungsbereich passiert, bis es von einer Kamera empfangen wird.

Ausführungsbeispiele sind in den Figuren dargestellt und werden im Folgenden näher erläutert.

Es zeigen
- Figur 1: eine Ansicht einer Leergutrücknahmevorrichtung gemäß verschiedenen Ausführungsbeispielen;
- Figur 2: eine Ansicht einer Erfassungseinrichtung gemäß verschiedenen Ausführungsbeispielen;
- Figur 3A und Figur 3B: zeigen Abläufe einer Rückgabe eines Leergutbehälters.
- Figur 4: eine Ansicht einer Erfassungseinrichtung gemäß verschiedenen Ausführungsbeispielen;
- Figur 5A und Figur 5B und Figur 5C: jeweils ein Kamerasystem;
- Figur 6: eine Ansicht einer Erfassungseinrichtung gemäß verschiedenen Ausführungsbeispielen;
- Figur 7: eine weitere Ansicht einer Erfassungseinrichtung gemäß verschiedenen Ausführungsbeispielen;
- Figur 8A und Figur 8B und Figur 8C: jeweils eine Ansicht eines Lichtquellensystems;
- Figuren 9A und 9B: zeigen Ansichten der Front einer Leergutrücknahmevorrichtung;
- Figur 10: zeigt ein Teil einer Leergutrücknahmevorrichtung;
- Figur 11: zeigt ein Blockdiagramm einer Leergutrücknahmevorrichtung.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

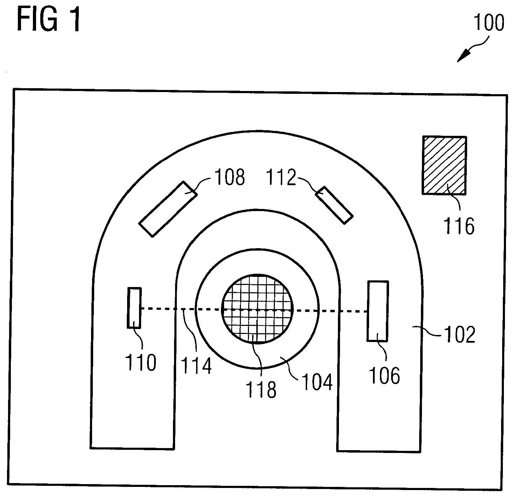

**Fig.1** zeigt schematisch eine Leergutrücknahmevorrichtung 100 zu der Rücknahme eines Leergutbehälters 118 gemäß verschiedenen Ausführungsbeispielen. Die Leergutrücknahmevorrichtung 100 kann eine Erfassungseinrichtung 102, einen Erfassungsbereich 104 und einen elektrischen Schaltkreis 116 aufweisen. Der Leergutbehälter 118 kann in die Leergutrücknahmevorrichtung 100 und den darin befindlichen Erfassungsbereich 104 eingeführt werden. Die Erfassungseinrichtung 102 kann zumindest eine Kamera 106 und eine weitere Kamera 108 und zumindest eine Lichtquelle 110 und eine weitere Lichtquelle 112 aufweisen.

Die Leergutrücknahmevorrichtung 100 kann beispielsweise ein Automat zur Rücknahme von ein oder mehreren Typen, Gruppen, Sorten oder Kategorien von Leergutbehältern 118 sein. Ein Leergutbehälter 118 kann beispielsweise eine Flasche, eine Dose oder ein sonstiger Behälter sein, beispielsweise für trinkbare Flüssigkeiten wie Wasser und Bier. Ein Leergutbehälter 118 kann beispielsweise aus Kunststoff, Glas oder Metall bestehen.

Die Erfassungseinrichtung 102 kann einen Träger aufweisen, an welchem mehrere Kameras 106, 108und mehrere Lichtquellen 110, 112 gehaltert sind. Beispielsweise kann der Schaltkreis 116 ebenfalls an dem Träger gehaltert sein.

Die Erfassungseinrichtung 102 kann in Form eines Hufeisens eingerichtet sein, wobei die Öffnung im Wesentlichen zu dem Boden der Leergutrücknahmevorrichtung gerichtet sein kann.

Die Hufeisenform kann den Vorteil bieten, dass zumindest eine Lichtquellen 110 und zumindest eine Kamera 106 derart angeordnet sein können, dass ein direkter Strahlengang 114 gegeben ist, beispielsweise ein gerader hindernisfreier Verlauf durch den Erfassungsbereich 104 hindurch von Licht von mindestens einer Lichtquelle 110 zu einer Kamera 106 bei Abwesenheit eines Leergutbehälters 118.

Mehrere Kameras 106, 108, beispielsweise fünf Kameras, die im Wesentlichen im gleichen Abstand voneinander entlang der Hufeisenform angebracht sein können, können um den Erfassungsbereich 104 angeordnet sein, in welchem ein oder mehrere Merkmale eines Leergutbehälters 118 mittels einer oder mehrerer Kameras 106, 108 erfasst werden können. Der Erfassungsbereich 104 kann zwischen mehreren Lichtquellen 110, 112 und mehreren Kameras 106, 108 angeordnet sein.

Ein in dem Erfassungsbereich 104 vorhandener Leergutbehälter 118 kann auf diesen treffendes Licht umlenken, blockieren oder in sonstiger Weise den Strahlengang 114 von Licht von einer oder mehreren Lichtquellen 110, 112 zu einer oder mehreren Kameras 106, 108 in dem Erfassungsbereich 104 verändern. Somit kann zumindest eine der mehreren Kameras 106 eine andere Menge Licht abhängig davon erfassen, ob ein Leergutbehälter 118 in dem Erfassungsbereich 104 anwesend ist oder nicht.

Zumindest eine Kamera 106 und zumindest eine Lichtquelle (oder Unterlichtquelle) 110 können paarweise derart angeordnet sein, dass jeweils Licht von der Lichtquelle 110 mit in dem in Fig.1 schematisch dargestellten Strahlengang 114 eine Kamera 106 erreicht, falls kein Leergutbehälter 118 vorhanden ist. Falls ein Leergutbehälter 118 in die Leergutrücknahmevorrichtung 100 und in den darin befindlichen Erfassungsbereich 104 eingeführt wird, kann der Strahlengang gestört/verändert sein, d.h. ein oder mehrere Kameras 106, 108 können eine veränderte Menge an Licht empfangen.

Eine Kamera der mehreren Kameras 106, 108 kann beispielsweise einen CCD(Charged Coupled Device - Ladungsgekoppelte Einrichtung)-Chip oder einen CMOS(Complimentary Metal Oxide Semiconductor - Komplementär-Metalloxid-Halbleiter)-Sensor aufweisen. Alternativ kann eine Kamera 106, 108 einen sonstigen optischen Sensor aufweisen. Die mehreren Kameras 106, 108 können untereinander gleich oder voneinander verschieden sein. Beispielsweise können mehrere voneinander verschiedene Kameras 106, 108 für verschiedene Spektralbereiche ausgelegt sein. Mittels Fenster, Linsen und Spiegelsysteme kann die Fokusebene einer oder mehrerer Kameras 106, 108 verändert werden. Beispielsweise kann mittels eines Spiegelsystems die Fokusebene einer Kamera 106, 108 auf die Oberfläche des Leergutbehälters 118 gelegt werden, wobei die Kamera 106, 108 einen Abstand von weniger als beispielsweise 100 cm, beispielsweise weniger als 20 cm, zu dem Leergutbehälter 118 aufweisen kann.

Eine oder mehrere Lichtquellen 110, 112 oder deren mehreren Unterlichtquellen können beispielsweise ein oder mehrere Halogenlampen und/oder LEDs aufweisen. Beispielsweise kann eine Lichtquelle 110, 112 eingerichtet sein, Licht zu emittieren, so dass für die mehreren Kameras 106, 108 ein ausreichendes Beleuchtungsniveau zur Verfügung steht. Eine Lichtquelle/Unterlichtquelle 110, 112 kann Licht emittieren, welches dem Erkennen des Vorhandenseins eines Leergutbehälters 118 mittels des Schaltkreises 116 und den mehreren Kameras 106, 108 dient. Anschaulich kann somit eine Lichtquelle eine Doppel- beziehungsweise Mehrfachfunktion erfüllen.

Eine Lichtquelle 110, 112 kann beispielsweise Spiegel, Linsen oder Fenster aufweisen, so dass Licht beispielsweise zu einer Kamera 106, 108 gerichtet ist, oder dass das Licht für ein allgemeines Beleuchtungsniveau diffus verteilt wird.

Der Schaltkreis 116 kann elektrisch mit den mehreren Kameras 106, 108 verbunden sein. Der Schaltkreis 116 kann sowohl analog als auch digital ausgeführt sein und kann einen oder mehrere eigene Prozessoren und Microcontroller umfassen. Der Schaltkreis 116 kann auch Teil eines Prozessors sein. Anschaulich kann der Schaltkreis 116in Verbindung mit einer oder mehreren Kameras 106 und einer oder mehreren Lichtquellen 110 als optischer Sensor fungieren. Somit kann detektiert werden, ob ein Leergutbehälter 118 in den Erfassungsbereich 104 eingebracht worden ist, wobei keine weiteren Systeme, beispielsweise eine zusätzliche Lichtschranke oder eine Waage, benötigt werden. In alternativen Ausführungsbeispielen kann jedoch beispielsweise zur Erhöhung der Ausfallsicherheit und der Fehlertoleranz eine zusätzliche Lichtschranke oder Waage zu der Leergutrücknahmevorrichtung 100 hinzugefügt sein.

Der Schaltkreis 116 kann mit den mehreren Kameras 106, 108 verbunden sein und eingerichtet sein, basierend auf der mittels mindestens einer Kamera 106 erfassten Lichtmenge, mindestens eine zusätzliche Kamera 108 der mehreren Kameras 106, 108 und/oder mindestens eine zusätzliche Lichtquelle 112 der mehreren Lichtquellen 110, 112 zu aktivieren oder zu deaktivieren. Beispielsweise kann Aktivieren oder Deaktivieren unter Anderem bedeuten, dass die mindestens eine Lichtquelle 112 und/oder die mindestens eine Kamera 106 an/ausgeschaltet werden oder, dass bei gepulstem Verhalten die Pulsfrequenz und/oder Pulsdauer erhöht/gesenkt werden.

Mithilfe des Schaltkreises 116 kann eine Veränderung der Lichtmenge, detektiert werden, falls ein Leergutbehälter 118 in den Erfassungsbereich 104 eingeführt wird. Der Schaltkreis 116 kann eingerichtet sein, bei einer Veränderung der Lichtmenge ein oder mehrere zusätzliche Lichtquellen/Unterlichtquellen 112 und/oder ein oder mehrere zusätzliche Kameras 108 und einen Prozessor zumindest teilweise zu aktivieren. Der Schaltkreis 116 kann auch eingerichtet sein, den Prozessor, ein oder mehrere zusätzliche Lichtquellen/Unterlichtquellen 112 und/oder ein oder mehrere zusätzliche Kameras 108erst dann zumindest teilweise zu aktivieren, falls eine geänderte Lichtmenge für eine bestimmte Zeitdauer vorliegt, um Fehlaktivierungen zu vermeiden.

Ein Prozessorkann mit den mehreren Kameras 106, 108 verbunden sein, so dass die von den mehreren Kameras 106, 108 erfassten Bilder (beziehungsweise Bilddaten) elektronisch dem Prozessor zugeführt werden können. Der Prozessor kann eingerichtet sein, die Bilddaten der mehreren Kameras 106, 108 mittels entsprechender Hard- und Software nach Erkennungsmerkmalen des Leergutbehälters 118 zu untersuchen.

Falls die Präsenz des Leergutbehälters 118 erkannt und dessen ein oder mehrere Merkmale erfasst wurden, kann der Leergutbehälter 118 beispielsweise mittels eines Transportsystems weitergeführt werden. Falls kein Erfassen der ein oder mehreren Merkmale des Leergutbehälters 118 erfolgt oder kein Erfassen der ein oder mehreren Merkmale möglich ist, kann das Transportsystem den Leergutbehälter durch eine Öffnung in der Leergutrücknahmevorrichtung 100 hindurch wieder (zumindest teilweise) ausführen, d.h. der Leergutbehälter 118 kann zurückgewiesen werden. Eine Zurückweisung kann auch erfolgen, falls ein oder mehrere Merkmale des Leergutbehälters 118 zwar erfasst wurden, aber beispielsweise der Leergutrücknahmevorrichtung 100 signalisiert wurde, dass ein Lager voll ist.

Der Prozessor kann beispielsweise Teil einer weiteren Schaltung beispielsweise Teil eines Computersystems oder beispielsweise Teil eines Mikrocontrollers sein. Der Prozessor kann mit einem Speicher oder einer Datenbank verbunden sein. Der Speicher kann Daten über ein oder mehrere bekannte Merkmale von Leergutbehältern beziehungsweise mehrere bekannte verknüpfte Merkmale enthalten, so dass der Prozessor die mittels der mehreren Kameras 106, 108 erfassten ein oder mehreren Merkmale abgleichen kann.

Der Prozessor kann derart eingerichtet sein, dass dieser ganz oder teilweise aktiviert, deaktiviert oder beispielsweise in einen Schlafmodus, beispielsweise einen Stand-by-Modus, versetzt werden kann. Beispielsweise kann Aktivieren oder Deaktivieren unter Anderem bedeuten, dass eine auf dem Prozessor laufende Software aus einem Speicher gelesen und ausgeführt beziehungsweise beendet wird. Mittels des Schaltkreises 116 kann der Prozessor vollständig aktiviert werden, falls sich ein Leergutbehälter 118 in dem Erfassungsbereich 104 der Leergutrücknahmevorrichtung 100 befindet.

Dadurch, dass der Prozessor und zusätzliche ein oder mehrere Lichtquellen/Unterlichtquellen 112 und zusätzliche ein oder mehrere Kameras 108 vollständig aktiviert werden können, falls ein Leergutbehälter 118 in den Erfassungsbereich 104 der Leergutrücknahmevorrichtung 100 eingeführt wird, kann beispielsweise missbräuchliches Verhalten verhindert werden. Beispielsweise kann verhindert werden, dass ein Leergutbehälter 118 in die Leergutrücknahmevorrichtung 100 eingebracht wird und unmittelbar nach dem erfolgten Erfassen der Merkmale des Leergutbehälters 118 wieder entnommen und nochmals eingeführt wird, da eine erfolgreiche Rücknahme eines Leergutbehälters 118 sowohl auf erfolgreichem Erfassen von Merkmalen, als auch auf einer Anwesenheit des Leergutbehälters 118 in dem Erfassungsbereich 104 während des Erfassungsvorgangs und darüber hinaus beruhen kann.

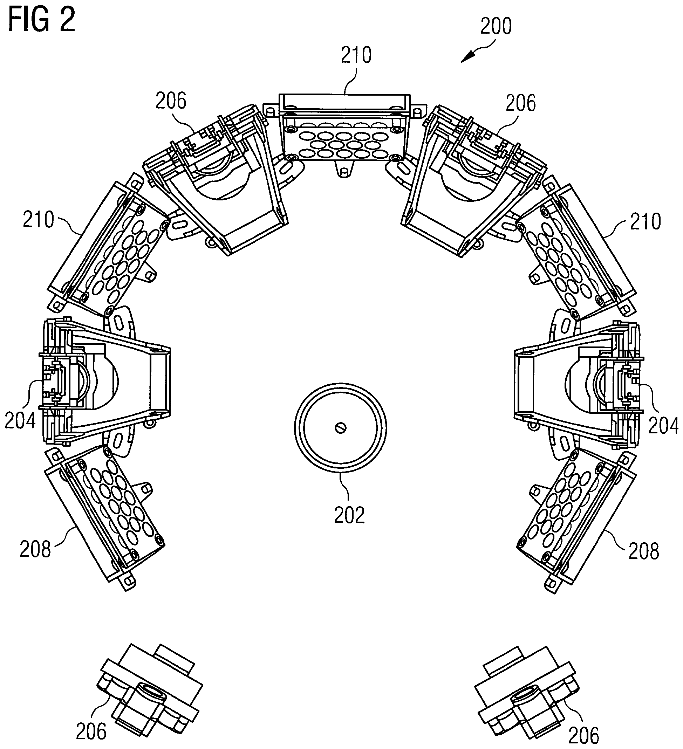

**Fig.2** zeigt eine schematische Ansicht einer Erfassungseinrichtung 200 zum Erfassen von ein oder mehreren Merkmalen eines Leergutbehälters 202. Die Erfassungseinrichtung 200 kann einen Träger aufweisen, auf welchem mehrere Kamerasysteme 204, 206, mehrere Lichtquellensysteme 208, 210 gehaltert sein können.

Ein Kamerasystem 204, 206 kann eine oder mehrere Kameras, eine Halterung und ein oder mehrere Spiegelsysteme zum Erfassen von ein oder mehreren Merkmalen des Leergutbehälters 202 aufweisen. Ein oder mehrere Spiegelsysteme können einer oder mehreren Kamerasysteme 204, 206 jeweils derart zugeordnet sein, dass sich eine Fokusebene der ein oder mehreren Kameras 204, 206 beispielsweise auf der Oberfläche des Leergutbehälters 202, bzw. dessen Nähe, befindet, wobei der Abstand zwischen den Kameras 204, 206 und dem Leergutbehälter 202 gering gehalten werden kann. Beispielsweise können verschiedene Kamerasysteme 204, 206 entlang einer Hufeisenform verschiedene Spiegelsysteme aufweisen.

Ein Lichtquellensystem 208, 210 kann eine oder mehrere Lichtquellen/Unterlichtquellen, eine Halterung und ein oder mehrere Spiegelsysteme aufweisen.

Beispielsweise können zwei Kamerasysteme 204 und zwei Lichtsysteme 208, wobei jeweils ein Kamerasystem 204 und einem Lichtsystem 208 zugeordnet ist, mittels eines Schaltkreises als optischer Sensor zum Erkennen der Präsenz des Leergutbehälters 202 fungieren. Anschaulich kann im Sinne der Figur das rechte Lichtquellensystem 208 und das linke Kamerasystem 204, sowie das linke Lichtquellensystem 208 und das rechte Kamerasystem 204, als zwei Lichtschranken fungieren. Sobald die Präsenz des Leergutbehälters 202 erkannt worden ist, kann der Schaltkreis eingerichtet sein, zusätzliche Lichtquellensysteme 210 und/oder zusätzliche Kamerasysteme 206 zumindest teilweise zu aktivieren.

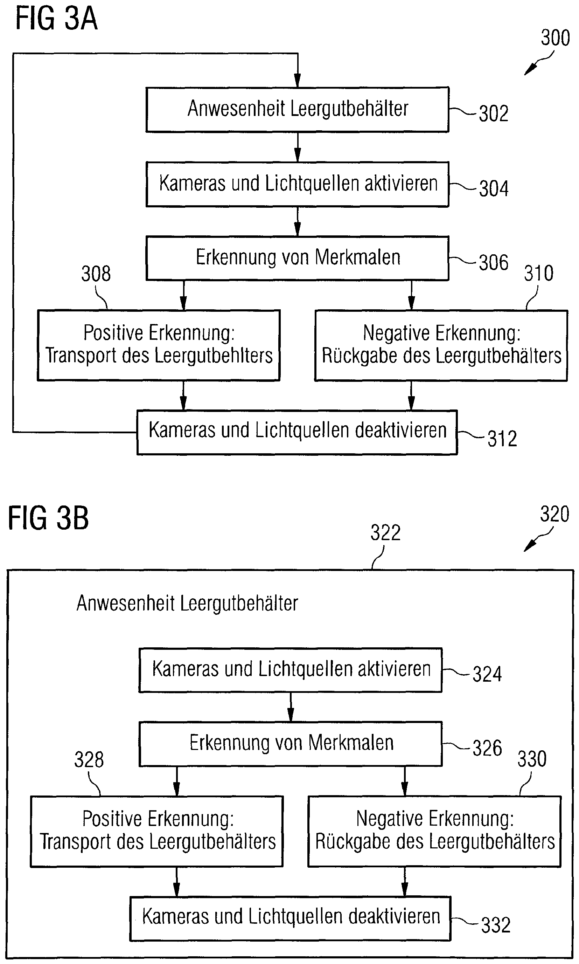

**Fig.3A** zeigt einen schematischen Ablauf 300 eines von der Leergutrücknahmevorrichtung im Rahmen der Rückgabe eines Leergutbehälters durchgeführten Verfahrens.

In 302 wird geprüft, d.h. das erfasst, ob ein Leergutbehälter in einen Erfassungsbereich einer Leergutrücknahmevorrichtung eingeführt wurde. Die Leergutrücknahmevorrichtung kann mehrere Kameras und mehrere Lichtquellen aufweisen. Die Prüfung kann darauf basieren, dass bei Anwesenheit eines Leergutbehälters in dem Erfassungsbereich eine andere Menge an Licht, welches von zumindest einer Lichtquelle emittiert wird, zumindest eine Kamera erreicht, als in dem Fall, in dem kein Leergutbehälter in dem Erfassungsbereich vorhanden ist. Die Prüfung kann solange dauern, bis die Anwesenheit eines Leergutbehälters erkannt wird.

Für den Fall, dass die Präsenz eines Leergutbehälters erkannt worden ist, können, in 304, zusätzliche ein oder mehrere Lichtquellen/Unterlichtquellen und/oder zusätzliche ein oder mehrere Kameras aktiviert werden. Ein Prozessor kann ebenfalls aktiviert werden. Der Prozessor kann auch dauerhaft aktiviert sein und nicht aufgrund der Präsenz eines Leergutbehälters aktiviert werden.

Der Prozessor kann mit den mehreren Kameras elektrisch verbunden sein und kann Bilddaten von den mehreren Kameras empfangen. In 306 kann der Prozessor die Bilddaten der Kameras nach ein oder mehreren bekannten Merkmalen eines Leergutbehälters, beispielsweise auch miteinander verknüpfte Merkmale, untersuchen.

Falls das Ermitteln von ein oder mehreren Merkmalen des Leergutbehälters "positiv" ausfällt, d.h. falls der Leergutbehälter akzeptiert, beziehungsweise dessen Typ, Sorte oder Kategorie, als vorhergesehenes zurückzunehmendes Leergut identifiziert wird, so kann, in 308, der Leergutbehälter mittels einer Transportvorrichtung beispielsweise in ein Lager oder zu einem Sortierbereich, beispielsweise zu einem Sortiertisch, beispielsweise einem Flaschentisch, oder auch zu einem Kompaktor, transportiert werden.

Falls die Erkennung der Merkmale eines Leergutbehälters "negativ" ausfällt, d.h. der Leergutbehälter nicht akzeptiert, beziehungsweise dessen Typ, Sorte oder Kategorie, nicht als vorhergesehenes zurückzunehmendes Leergut identifiziert oder als beschädigt erkannt wurde, so kann, in 310, der Leergutbehälter, beispielsweise mittels einer Transportvorrichtung, wieder aus der Leergutrücknahmevorrichtung heraus transportiert werden.

Nach Abschluss des Transportvorgangs des Leergutbehälters können die zusätzlichen ein oder mehreren Lichtquellen/Unterlichtquellen und/oder die zusätzlichen ein oder mehreren Kameras und beispielsweise auch der Prozessor, in 312, deaktiviert werden und die Leergutrücknahmevorrichtung kann das Verfahren dann erneut in 302 beginnend durchführen.

**Fig.3B** zeigt einen schematischen Ablauf 320 eines weiteren von der Leergutrücknahmevorrichtung im Rahmen der Rückgabe eines Leergutbehälters durchgeführten Verfahrens.

Fig.3B unterscheidet sich dadurch von Fig.3A, dass die Prüfung der Anwesenheit eines Leergutbehälters nicht nur in einem ersten Prozess 302 vollzogen wird, sondern, wie in 322 beschrieben, permanent vollzogen wird.

D.h. falls ein Leergutbehälter in die Leergutrücknahmevorrichtung eingeführt und dessen Anwesenheit in dem Erfassungsbereich erfasst wird, so können, in 324,die zusätzlichen ein oder mehreren Lichtquellen/Unterlichtquellen und/oder die zusätzlichen ein oder mehreren Kameras und beispielsweise auch der Prozessor aktiviert werden. In 326 kann mittels des Prozessors das Ermitteln von einem oder mehreren Merkmalen des Leergutbehälters durchgeführt werden. Analog zu 308 und 310 aus Fig.3A kann, in 328 und 330, je nach positivem oder negativem Ergebnis des Ermittelns der Merkmale des Leergutbehälters, entsprechend der Leergutbehälter transportiert und anschließend, in 332, die zusätzlichen ein oder mehreren Lichtquellen/Unterlichtquellen und/oder die zusätzlichen ein oder mehreren Kameras und beispielsweise auch der Prozessor deaktiviert werden.

Falls während der Durchführung des Verfahrens in 324, 326, 328 und 330 die Prüfung auf Anwesenheit des Leergutbehälters negativ ist beziehungsweise wird, so kann das Verfahren direkt in 332 weitergeführt werden und die zusätzlichen ein oder mehreren Lichtquellen/Unterlichtquellen und/oder die zusätzlichen ein oder mehreren Kameras und beispielsweise auch der Prozessor deaktiviert werden. Alternativ oder zusätzlich kann der Vorgang als abgeschlossen gewertet werden, so dass ein erneutes Einführen des Leergutbehälters als neuer Vorgang gewertet wird.

In alternativen Ausführungsbeispielen kann bei negativer Prüfung auf Anwesenheit eines Leergutbehälters in 324, 326, 328, 330 zunächst eine vorgegebene Zeitdauer abgewartet werden, bis die zusätzlichen ein oder mehreren Lichtquellen/Unterlichtquellen und/oder die zusätzlichen ein oder mehreren Kameras und beispielsweise auch der Prozessor deaktiviert werden.

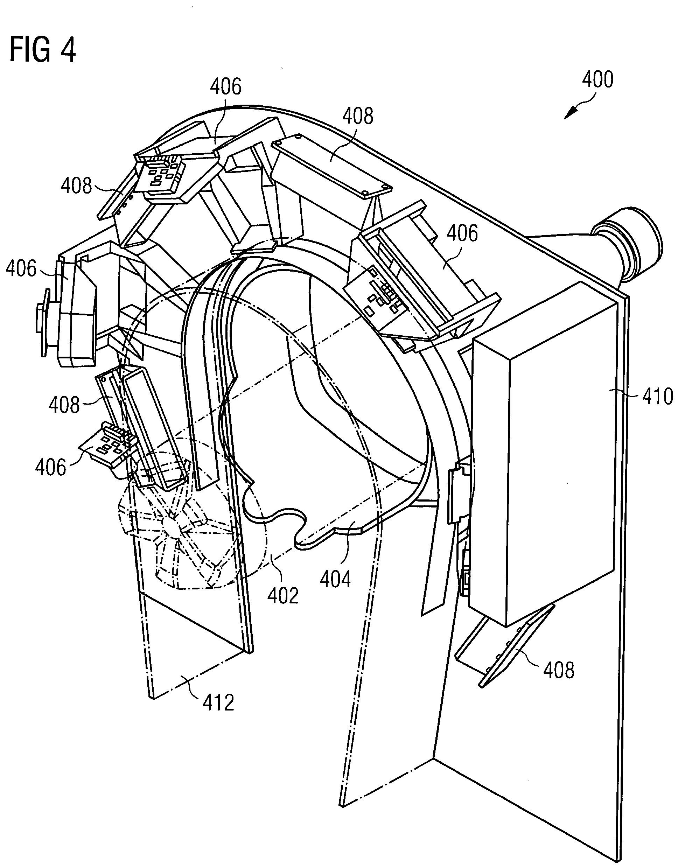

**Fig.4** zeigt eine Ansicht einer Erfassungseinrichtung 400. Mit Bezugszeichen versehen sind ein Leergutbehälter 402, eine Öffnung 404, mehrere Kamerasysteme 406, mehrere Lichtquellensysteme 408 und eine Schaltungseinheit 410. Ferner ist ein Schutzelement 412 dargestellt.

Dem Schutzelement 412 können ein oder mehrere Funktionen innewohnen. Einerseits kann das Schutzelement 412 dazu dienen Teile der Erfassungseinrichtung 400, beispielsweise die empfindliche Optik der (mehreren) Kamerasysteme 406, vor einer mechanischen Einwirkung des Leergutbehälters 402 zu schützen. Das Schutzelement 412 kann auch dazu dienen, den Leergutbehälter 402 bei dem Einbringen in eine Leergutrücknahmevorrichtung zu führen oder die Erfassungseinrichtung 400 vor Schmutz oder Flüssigkeit zu schützen.

Das Schutzelement 412 kann transparent sein, so dass die mehreren Kamerasysteme 406 durch das Schutzelement 412 hindurch das Licht der mehreren Lichtquellensysteme 408 erfassen können und so die Präsenz des Leergutbehälters 402 erkennen und dessen ein oder mehreren Merkmale erfassen können.

Die Schaltungseinheit 410 kann mit verschiedenen Elementen der Erfassungseinrichtung 400 verbunden sein. Sie kann eine oder mehrere Schaltungen und/oder Prozessoren aufweisen und kann mehrere Funktionen bereitstellen. Beispielsweise kann die Schaltungseinheit 410 eingerichtet sein, Bilddaten oder Videodaten von den mehreren Kamerasystemen 406 zu empfangen und an einen Prozessor weiterzuleiten. Die Schaltungseinheit 410 kann derart eingerichtet sein, dass Daten zwischengespeichert, verarbeitet/vorverarbeitet und/oder mittels eines Kommunikationsprotokolls (beispielsweise TCP-IP) ganz oder teilweise weitergeleitet werden. Ferner kann die Schaltungseinheit 410 eingerichtet sein, die mehreren Kamerasysteme 406 und/oder die mehreren Lichtquellensysteme 408 zu steuern oder zu regeln. Beispielsweise kann die Schaltungseinheit 410 einen Schaltkreis aufweisen, welcher ein oder mehrere Kamerasysteme 406 und/oder ein oder mehrere Lichtquellensysteme 408 aktiviert, sobald die Präsenz eines Leergutbehälters 402 erkannt worden ist.

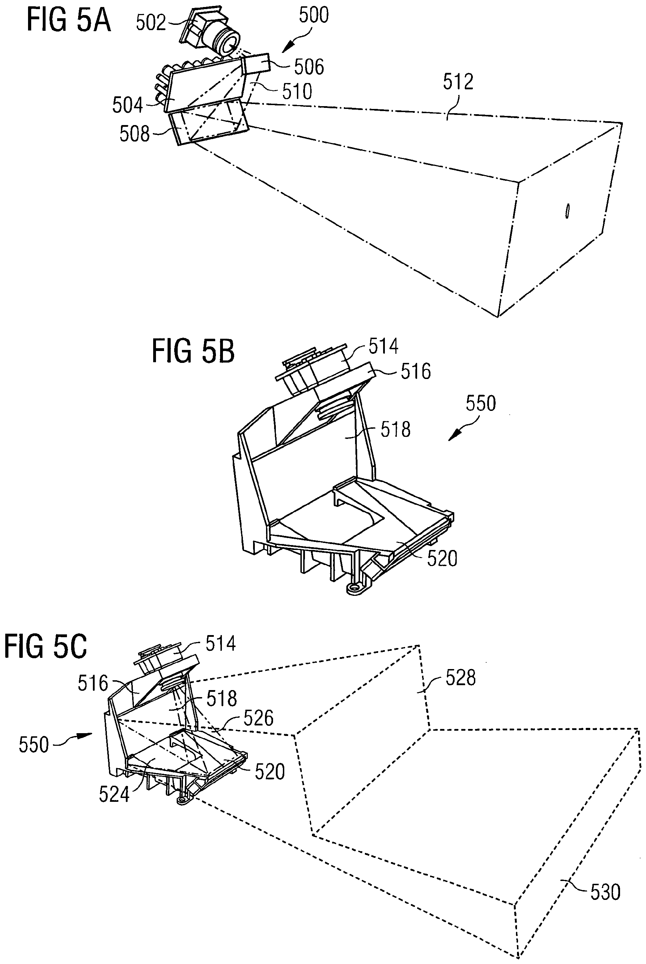

**Fig.5A** zeigt eine schematische Ansicht eines Kamerasystems.

Das Kamerasystem 500 kann eine Kamera 502 aufweisen. Der von der Kamera 502 erfasste Bildbereich bzw. Licht, welches die Kamera 502 erreicht, kann mittels eines ersten Spiegels 506 und eines zweiten Spiegels 508 umgelenkt werden. Das Kamerasystem 500 kann eine Beleuchtungseinheit 504 aufweisen. Ein Strahlengang 512 kann von einem Leergutbehälter oder einer Lichtquelle zu dem zweiten Spiegel 508 und von dem zweiten Spiegel ein Strahlengang 510 zu dem ersten Spiegel 506 und von dort in die Kamera 502 führen.

Mittels des ersten Spiegels 506 und des zweiten Spiegels 508 kann ermöglicht werden, dass die Fokusebene der Kamera 502 auf der Oberfläche eines Leergutbehälters liegt, wobei der räumliche Abstand zwischen dem Leergutbehälter und der Kamera 502 beziehungsweise dem Kamerasystem 500 gering gehalten werden kann.

Die Beleuchtungseinheit 504 kann eingerichtet sein, ein gewünschtes Beleuchtungsniveau für die Aufnahme eines Bildes mit der Kamera 502 zu liefern. Die Beleuchtungseinheit kann als Lichtquelle, beispielsweise mit mehreren Unterlichtquellen, fungieren.

**Fig.5B** zeigt eine schematische Ansicht eines Kamerasystems 550.

Das Kamerasystem 550 weist eine Kamera 514, eine Halterung 516, einen ersten Spiegel 518 und einen zweiten Spiegel 520 auf.

Die Halterung 516 kann eingerichtet sein, die Kamera 514 derart zu haltern, dass die Kamera in ihrer Position verändert werden kann, beispielsweise justiert werden kann.

**Fig.5C** zeigt eine weitere schematische Ansicht des Kamerasystems 550.

Zusätzlich zu FIG.5A ist der Strahlengang 526 von der Kamera 514 zu dem zweiten Spiegel 520, der Strahlengang 524 von dem zweiten Spiegel 520 zu dem ersten Spiegel 518 und die beiden Strahlengänge 528, 530 von dem ersten Spiegel 518 beispielsweise zu einer Lichtquelle oder einem Leergutbehälter dargestellt. Wie durch die Aufteilung in den Strahlengang 528 und den Strahlengang 530 schematisch dargestellt, können die Kamera 514 und die beiden Spiegel 518, 520 derart gestaltet sein, dass nicht jeder Strahlengang über beide Spiegel führt, sondern beispielsweise nur über einen Spiegel.

In diesem Beispiel überkreuzen (mit einer räumlichen Überlagerung) sich die Strahlengänge 528, 530, 524 und 516. Dadurch kann die Fokusebene der Kamera 514 verlagert werden, was beispielsweise ermöglicht den räumlichen Abstand zwischen der Kamera 514 und einem (fokussiert zu erfassenden) Leergutbehälter zu verringert und so eine kompakte Bauweise einer Erfassungseinrichtung zu ermöglichen.

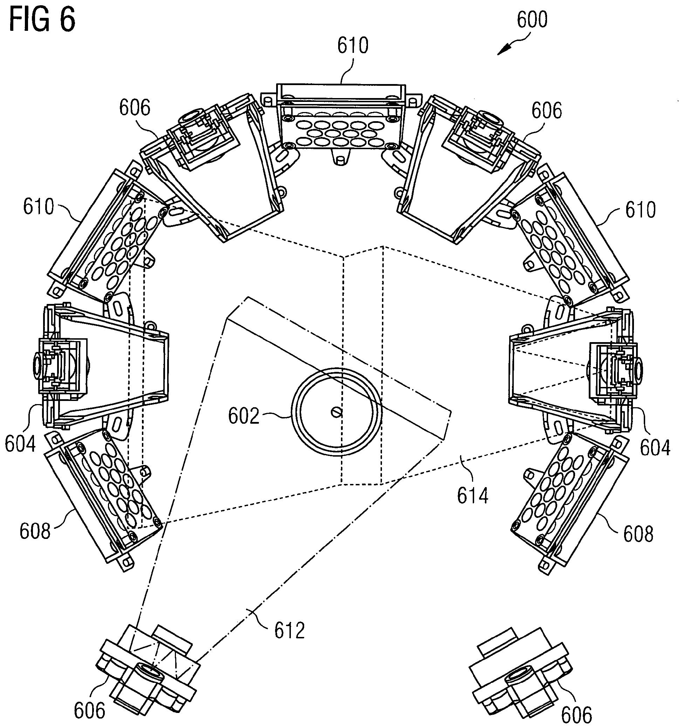

**Fig.6** zeigt eine Ansicht einer Erfassungseinrichtung 600 gemäß verschiedenen Ausführungsbeispielen zum Erfassen von ein oder mehreren Merkmalen eines Leergutbehälters 602.

Die Erfassungseinrichtung 600 kann einen Träger aufweisen, auf welchem mehrere Kamerasysteme 604, 606 und mehrere Lichtquellensysteme 608, 610 gehaltert sein können.

Ein Kamerasystem 604, 606 kann eine oder mehrere Kameras, eine Halterung und ein oder mehrere Spiegelsysteme zum Erfassen von ein oder mehreren Merkmalen des Leergutbehälters 602 aufweisen. Ein oder mehrere Spiegelsysteme können einer oder mehreren Kamerasysteme 604, 606 jeweils derart zugeordnet sein, dass sich eine Fokusebene der ein oder mehreren Kameras 604, 606 beispielsweise auf der Oberfläche des Leergutbehälters 602, bzw. dessen Nähe, befindet, wobei der Abstand zwischen den Kameras 604, 606 und dem Leergutbehälter 602 gering gehalten werden kann. Beispielsweise können verschiedene Kamerasysteme 604, 606 entlang einer Hufeisenform verschiedene Spiegelsysteme aufweisen.

Die Erfassungseinrichtung 600 kann der Erfassungseinrichtung 200 aus Fig.2 entsprechen, wobei die beiden Strahlengänge 612 und 614 schematisch dargestellt sind. Die hufeisenförmige Anordnung der mehreren Lichtquellensysteme 608, 610 und der mehreren Kamerasysteme 604, 606 kann derart sein, dass ein Abschnitt der Oberfläche eines Leergutbehälters in dem Erfassungsbereich, welcher beispielsweise 360° rund um die Oberfläche des Leergutbehälters führt, zeitgleich vollständig erfasst werden kann.

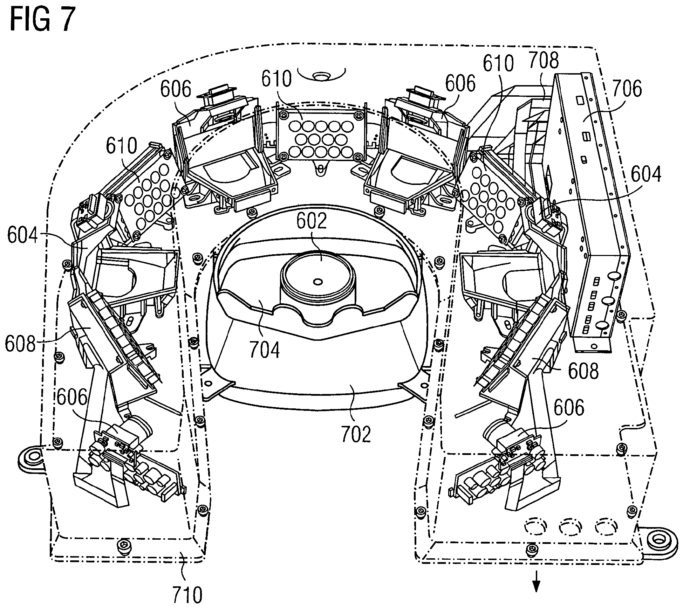

**Fig.7** zeigt eine weitere Ansicht einer Erfassungseinrichtung 600 gemäß verschiedenen Ausführungsbeispielen zum Erfassen von ein oder mehreren Merkmalen eines Leergutbehälters 602.

Zuzüglich der Darstellung in Fig.6 zeigt Fig.7 eine Einführungsvorrichtung 702, eine Öffnung 704, eine Schaltungseinheit 706, mehrere elektrische Verbindungen 708 und eine Abdeckung 710.

Der Leergutbehälter 602 kann durch die Öffnung 704 der Erfassungseinrichtung 600 (beziehungsweise der Leergutrücknahmevorrichtung) hindurch in einen Erfassungsbereich der Erfassungseinrichtung 600 eingeführt werden. Die Einführungsvorrichtung 702 kann dabei derart gestaltet sein, dass dem Leergutbehälter 602 eine Liegefläche bereitsteht, welche aufgrund ihrer Form dazu dienen kann, den Leergutbehälter 602 in eine gewünschte Position, beispielsweise zentriert in dem Erfassungsbereich, zu bringen.

Die Schaltungseinheit 706 kann mit verschiedenen Elementen der Erfassungseinrichtung 600 mittels mehrerer elektrischer Verbindungen 708 verbunden sein. Die Schaltungseinheit 706 kann eingerichtet sein, Daten zu senden und zu empfangen. Die Schaltungseinheit 706 kann eingerichtet sein, die mehreren Kamerasysteme 604, 606 und/oder die mehreren Lichtquellensysteme 608, 610 beziehungsweise darin enthaltene mehreren Lichtquellen/Unterlichtquellen und mehreren Kameras zu steuern oder zu regeln. Beispielsweise kann die Schaltungseinheit 706 einen Schaltkreis aufweisen, welcher mit den beiden Kamerasystemen 604 und den beiden Lichtquellensystemen 608 einen optischen Sensor zum Erkennen der Präsenz des Leergutbehälters 602 darstellt. Falls die Präsenz des Leergutbehälters 602 erkannt worden ist, kann der Schaltkreis weitere ein oder mehrere Kamerasysteme 606 und/oder weitere ein oder mehrere Lichtquellensysteme 610 aktivieren.

Die Abdeckung 710 kann eingerichtet sein die Erfassungseinrichtung 600 beispielsweise vor mechanischer Einwirkung, Schmutz, Flüssigkeit oder sonstiger Beeinträchtigungen zu schützen. Die Abdeckung 710 kann Öffnungen aufweisen, um eine Kühlung/Lüftung der Erfassungseinrichtung 600 oder Teilen davon zu ermöglichen. Die Abdeckung 710 kann sowohl transparente als auch nicht transparente Bereiche aufweisen und beispielsweise mehrere Teilabdeckungen aufweisen. Beispielsweise kann ein transparentes Schutzelement Teil der Abdeckung sein.

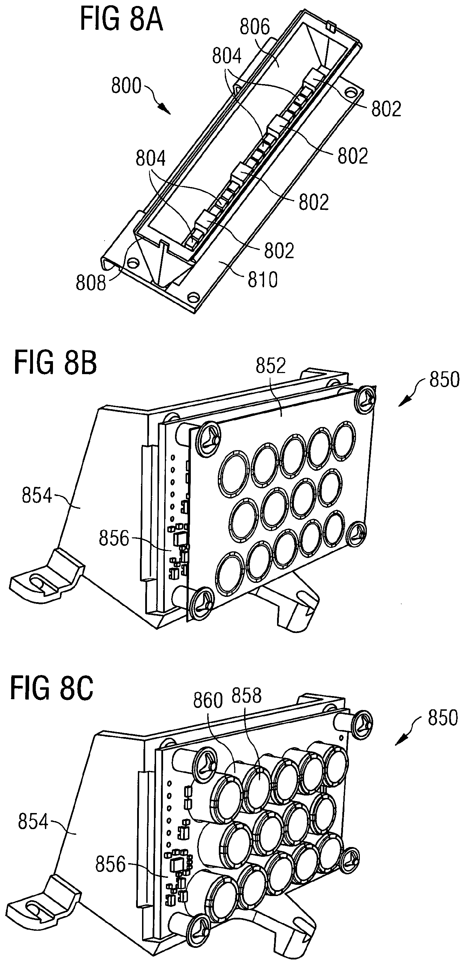

**Fig.8A** zeigt eine schematische Ansicht eines Lichtquellensystems 800.

Das Lichtquellensystem 800 kann eine Lichtquelle mit mehreren Unterlichtquellen 802, 804 aufweisen. Das Lichtquellensystem 800 kann einen Reflektor 806 aufweisen. Auf dem Reflektor 806 kann ein Fenster 808 angeordnet sein. Das Lichtquellensystem 800 kann ferner eine Halterung 810 aufweisen.

Die mehreren Unterlichtquellen 802, 804 können eingerichtet sein, das Beleuchtungsniveau innerhalb eines Erfassungsbereichs zu erhöhen und so den mehreren Kameras beispielsweise das Erfassen von Merkmalen eines Leergutbehälters zu ermöglichen. Die Aufteilung in mehrere Unterlichtquellen 802, 804 kann der Ausfallsicherheit der gesamten Lichtquelle dienen, da falls eine Unterlichtquelle 802, 804 ausfällt, die Lichtquelle und damit die Erfassungseinrichtung 200 nicht vollständig ausfallen. Die mehreren Unterlichtquellen 802, 804 können verschieden gerichtet und verschiedene Abstrahlcharakteristiken aufweisen. So kann beispielsweise eine Gruppe von Unterlichtquellen 802, 804 direkt auf einen Leergutbehälter gerichtet sein, während eine weitere Gruppe von Unterlichtquellen 802, 804, beispielsweise diffus, den Leergutbehälter und dessen Umgebung ausleuchten können.

Beispielsweise können die mehreren Unterlichtquellen 802, 804 derart gestaltet sein, dass eine erste Gruppe von Unterlichtquellen 802 Licht gerichtet auf eine oder mehrere Kameras emittiert, so dass mittels der einen oder mehreren Kameras, einer Schaltung und der ersten Gruppe von Unterlichtquellen 802 ein optischer Sensor zu dem Erkennen der Anwesenheit eines Leergutbehältersrealisiert ist. Ferner kann eine zweite Gruppe von Unterlichtquellen 804 eingerichtet sein, Licht in einem zumindest teilweisen nicht sichtbaren Spektralbereich, beispielsweise ultraviolettes oder infrarotes Licht, zu emittieren. Beispielsweise können ein oder mehrere Merkmale eines Leergutbehälters nur mit oder verbessert mit nicht sichtbarem Licht und dafür geeigneten ein oder mehreren Kameras erfassbar sein. Eine dritte Gruppe von Unterlichtquellen kann dazu eingerichtet sein, die Umgebung des Leergutbehälters und den Leergutbehälter zu beleuchten. Mittels einer solchen Beleuchtung der Umgebung kann das gesamte Beleuchtungsniveau gesteigert werden, was vorteilhaft für den von den ein oder mehreren Kameras erfassten Kontrastwert sein kann. Verschiedene Gruppen von Unterlichtquellen 802, 804 können dieselbe Funktion erfüllen.

Das Fenster 808 und der Reflektor 806 können eingerichtet sein, einerseits die Lichtquelle, beziehungsweise zugehörige elektronische Bauteile und Schaltungen der Lichtquelle, zu schützen und andererseits den Strahlengang der Lichtquelle zu gestalten, beispielsweise zu richten und Emission in eine ungewünschte Richtung zu unterbinden.

Die Lichtquelle oder beispielsweise ein oder mehrere Gruppen von Unterlichtquellen 802, 804 können eingerichtet sein gepulstes Licht zu erzeugen. Anschaulich können die Pulse als "Blitzlicht" für mehrere Kameras zu der Aufnahme jeweils eines Bildes fungieren. Beispielsweise kann ein Schaltkreis und/oder ein Prozessor eingerichtet sein die Pulsung und die Aufnahme von mehreren Bildern zeitlich zu synchronosieren.

**Fig.8B** zeigt eine schematische Ansicht eines Lichtquellensystems 850.

Das Lichtquellensystem 850 kann eine Abdeckung 852, eine Halterung 854 und eine Schaltung 856 aufweisen.

Die Halterung 854 kann dazu dienen, das Lichtquellensystem 850 an einem Träger zu befestigen. Die Schaltung 856 kann ein oder mehrere Lichtquellen/Unterlichtquellen mit Strom versorgen und diese steuern und/oder regeln, beispielsweise abhängig von empfangenen Steuerungssignalen.

Die Abdeckung 852 kann mehrere Öffnungen oder transparente Bereiche aufweisen, um mehreren Lichtquellen/Unterlichtquellen die Lichtabstrahlung in einen Erfassungsbereich zu ermöglichen. Beispielsweise kann die Abdeckung 852 ein Polarisationsfilter sein oder mehrere Polarisationsfilter aufweisen.

**Fig.8C** zeigt eine weitere schematische Ansicht eines Lichtquellensystems 850.

In dieser Ansicht ist die Abdeckung 852 nicht gezeigt, um eine Ansicht einer Unterlichtquelle 860, beispielsweise eine LED, und eine zu der Unterlichtquelle 860 zugeordneten Linse 858 zu ermöglichen.

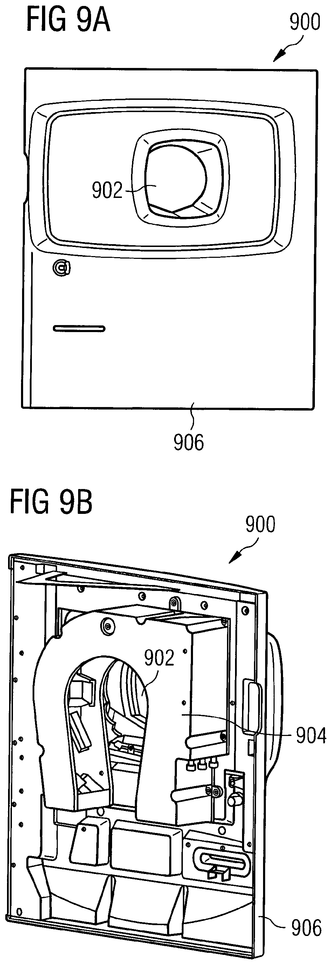

**Fig.9A** zeigt eine schematische Ansicht einer Vorderseite der Front einer Leergutrücknahmevorrichtung 900.

Die Vorderseite der Vorderseitenabdeckung 900 der Leergutrücknahmevorrichtung kann eine Öffnung 902, durch welche ein Leergutbehälter hindurch in einen Erfassungsbereich gebracht werden kann, und eine Fronttür 906 aufweisen.

**Fig.9B** zeigt eine schematische Ansicht einer Rückseite der Vorderseitenabdeckung 900 der Leergutrücknahmevorrichtung.

Die Fronttür 906 kann derart innenseitig gestaltet sein, dass die Erfassungseinrichtung 904 an der Fronttür 906 befestigt werden kann. Somit kann bei Öffnen der Fronttür 906 die Erfassungseinrichtung 904 leicht gewartet werden, ohne dass sonstige Teile Leergutrücknahmevorrichtung 900 entfernen werden müssen. Anschaulich ist somit die hufeisenförmige Erfassungseinrichtung (beispielsweise die Erfassungseinrichtung Fig.7) um die Öffnung 902 herum angeordnet sein, wobei die offene Seite der Hufeisenform auf den Boden der Fronttür hin gerichtet ist.

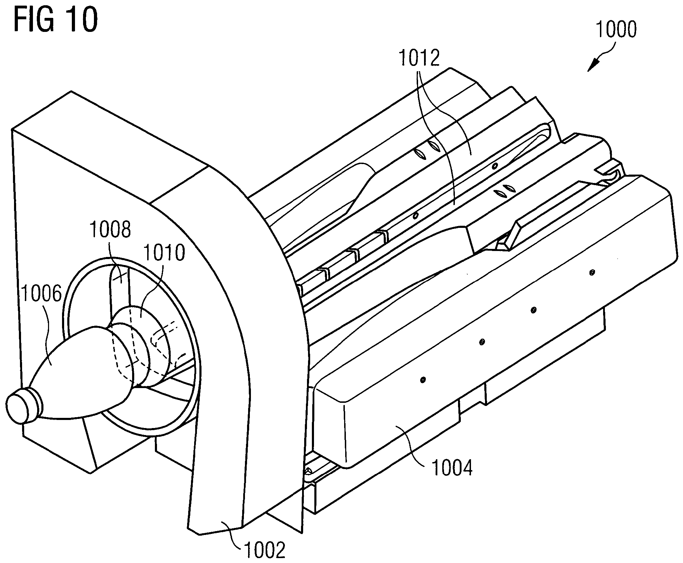

**Fig.10** zeigt schematisch ein Teil einer Leergutrücknahmevorrichtung 1000.

Die Leergutrücknahmevorrichtung 1000 kann eine Erfassungseinrichtung 1002 (beispielsweise die Erfassungseinrichtung aus Fig.7) und ein Transportsystem (beispielsweise eine Transporteinrichtung) 1004 aufweisen. Ein Leergutbehälter 1006 kann durch die Öffnung (beispielsweise die Öffnung 902) derart in die Leergutrücknahmevorrichtung 1000 eingebracht werden, dass der Leergutbehälter 1006 in den Erfassungsbereich 808 der Erfassungseinrichtung 802 zumindest teilweise eingeführt werden kann. Das Transportsystem 804, welches mittels eines Spalts 1010 von der Erfassungseinrichtung 1002 getrennt ist, kann zwei einander in einem spitzen Winkel einander zugeneigte Transportbänder 1012 aufweisen.

Aufgrund des Spaltes 1010 zwischen dem Transportsystem 1004 und der Erfassungseinrichtung 1002 kann beispielsweise das Licht einer Lichtquelle zumindest teilweise nicht blockiert werden und ermöglicht beispielsweise, dass ein Abschnitt der Oberfläche des Leergutbehälters 1006, welcher rund um den Leergutbehälter 1006 führt, vollständig mittels mehrerer Kameras erfasst werden kann.

Der Erfassungsbereich 1008 kann, wie hier gezeigt, beispielsweise in mindestens einer Dimension kleiner sein als ein Leergutbehälter 1006. Da die Bilddaten von mehreren Kameras der Erfassungseinrichtung 1002 beispielsweise mittels eines Speichers gespeichert werden können und die Bilddaten mittels eines Prozessors zu einem Bild (oder eine Videobildfolge) zusammengesetzt werden können, können mittels des Prozessors zusammengesetzte Bilddaten berechnet werden, welche die gesamte Oberfläche des Leergutbehälters 1006 repräsentieren.

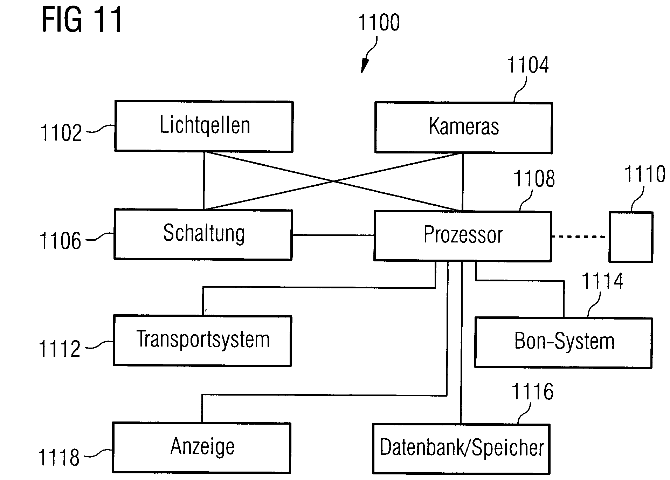

**Fig.11** zeigt ein Blockdiagramm 1100 eines Teils einer Leergutrücknahmevorrichtung.

Die Leergutrücknahmevorrichtung kann mehrere Lichtquellen 1102, mehrere Kameras 1104, eine Schaltung 1106, einen Prozessor 1108, ein Transportsystem 1112, ein Pfandbon-System 1114, eine Anzeige 1118 und eine Datenbank oder Speicher 1116 aufweisen. Ferner kann der Prozessor 1108 mit einer anderen Vorrichtung 1110 außerhalb der Leergutrücknahmevorrichtung, beispielsweise mittels eines Kommunikationsnetzwerks, beispielsweise eines Computernetzwerks, verbunden sein.

Gemäß verschiedenen Ausführungsbeispielen kann die Schaltung 1106 und/oder der Prozessor 1108 eingerichtet sein, die mehreren Lichtquellen 1102 und/oder die mehreren Kameras 1104 zu steuern. Beispielsweise kann die Beleuchtungsstärke der mehreren Lichtquellen auf die mehreren Kameras 1104 derart abgestimmt werden, dass eine ausreichende Helligkeit oder Kontrast der von den mehreren Kameras 1104 erfassten Bildern gegeben ist. Es können auch verschiedene Beleuchtungsniveaus festgesetzt sein, für die Fälle, dass ein Leergutbehälter in der Leergutrücknahmevorrichtung detektiert worden ist oder nicht.

Zumindest eine Lichtquelle der mehreren Lichtquellen 1102 und zumindest eine Kamera der mehreren Kameras 1104 können mit der Schaltung 1106 einen optischen Sensor bilden, welcher die Anwesenheit eines Leergutbehälters detektieren kann. Falls die Anwesenheit eines Leergutbehälters detektiert wird, so kann mindestens eine zusätzliche Lichtquelle der mehreren Lichtquellen 1102 und/oder mindestens eine zusätzliche Kamera der mehreren Kameras 1104 aktiviert werden. Ferner kann der Prozessor 1108 oder können Teile des Prozessors 1108 aktiviert werden, beispielsweise aus einem Stand-by-Modus in einen Aktiv-Modus geschalten werden. Mittels der mindestens einen zusätzlichen Lichtquelle, der mindestens einen zusätzlichen Kamera und des Prozessors 1108 kann die Leergutrücknahmevorrichtung für das Erfassen von ein oder mehreren Erkennungsmerkmalen eines Leergutbehälters eingerichtet sein.

Der Prozessor 1108 kann eingerichtet sein, Bilddaten von ein oder mehreren Kameras 1104 zu empfangen. Anhand der Bilddaten kann der Prozessor 1108 eingerichtet sein, Merkmale eines Leergutbehälters mit beispielsweise in einer Datenbank oder einem Speicher 1116 gespeicherten ein oder mehreren, beispielsweise auch verknüpften, Merkmalen zu vergleichen.

Abhängig davon, ob ein Leergutbehälter von dem Prozessor 1108 erfasst wurde, kann das Transportsystem 1112 mittels des Prozessors 1108 angewiesen werden, den Leergutbehälter aus dem Erfassungsbereich der mehreren Kameras 1104 heraus, beispielsweise in ein Lager, zu transportieren. Falls ein Leergutbehälter oder dessen Typ, Sorte oder Kategorie nicht erfasst oder als ungeeignet erfasst wurde, kann das Transportsystem 1112 angewiesen werden, den Leergutbehälter wieder aus der Leergutrücknahmevorrichtung heraus zu transportieren.

Abhängig davon, ob der Prozessor 1108 einen Leergutbehälter oder dessen Typ, Sorte oder Kategorie erfasst oder nicht erfasst hat, d.h. einen Status für den Leergutbehälter festgestellt hat, kann der Prozessor 1108 mittels einer Anzeige 1118 eingerichtet sein, den jeweiligen Status anzuzeigen. Die Anzeige 1118 kann beispielsweise ein Monitor und/oder auch eine Lampe sein, welche den Status mittels einer Farbcodierung wiedergibt.

Der Prozessor 1108 kann eingerichtet sein, eine Historie über eingeführte Leergutbehälter, beispielsweise in einer Datenbank oder einem Speicher 1116, zu speichern.

Der Prozessor 1108 kann mittels eines Pfandbon-Systems 1114 eingerichtet sein, einen Pfandwert von zurückgegebenen Leergutbehältern zu berechnen und zu summieren und somit einen Pfandwert für alle von einem Nutzer im Rahmen eines Rücknahmevorgangs in die Leergutrücknahmevorrichtung eingegebenen Leergutbehälter zu berechnen. Das Pfandbon-System 1114 kann zumindest teilweise mittels des Prozessors 1108 realisiert sein. Das Pfandbon-System 1114 kann eingerichtet sein, einen Pfandbeleg, beispielsweise auf Verlangen eines Nutzers, auszudrucken, der den ermittelten Pfandwert angibt.

## Patentansprüche

1. Leergutrücknahmevorrichtung (100), aufweisend:
eine optische Erfassungseinrichtung (102) zum optischen Erfassen von Merkmalen eines Leergutbehälters (118),
wobei die Erfassungseinrichtung (102) aufweist:
• mehrere Lichtquellen (110, 112); und
• mehrere Kameras (106, 108);
einen Prozessor, der eingerichtet ist, die Merkmale des Leergutbehälters zu ermitteln, die mittels der mehreren Kameras erfasst worden sind und von diesen an den Prozessor übermittelt worden ist;
einen Schaltkreis (116), der mit den mehreren Kameras (106, 108) verbunden ist;
• wobei die Lichtquellen (110, 112) und die Kameras (106, 108) hufeisenförmig um einen Erfassungsbereich (104) herum angeordnet sind, in den der Leergutbehälter (118) zum optischen Erfassen der Merkmale gebracht wird;
• wobei mindestens eine der mehreren Lichtquellen (110) und mindestens eine der mehreren Kameras (106) derart angeordnet sind, dass die mindestens eine Kamera (106) im Strahlengang (114) der mindestens einen Lichtquelle (110) angeordnet ist, so dass, wenn ein Leergutbehälter (118) in den Erfassungsbereich (104) gebracht ist, die mindestens eine Kamera (106) eine Veränderung einer Lichtmenge von der mindestens einen Lichtquelle (110) erfasst verglichen mit dem Fall, dass der Erfassungsbereich (104) frei ist von dem Leergutbehälter (118);
• einen Schaltkreis (116), eingerichtet ist, basierend auf der mittels der mindestens einen Kamera (106) erfassten Veränderung der Lichtmenge, mindestens eine zusätzliche Kamera (108) der mehreren Kameras (106, 108) und/oder mindestens eine zusätzliche Lichtquelle (112) der mehreren Lichtquellen (110, 112) zu aktivieren;
• wobei der Schaltkreis eingerichtet ist, die mindestens eine zusätzliche Kamera der mehreren Kameras und/oder die mindestens eine zusätzliche Lichtquelle der mehreren Lichtquellen zu deaktivieren nach der Erkennung der Merkmale.

2. Leergutrücknahmevorrichtung (100) gemäß Anspruch 1, ferner aufweisend:
• ein Transportsystem (1004);
wobei der Prozessor (1108), nach dem Aktivieren, Bilddaten von den mehreren Kameras empfängt und nach ein oder mehreren bekannten Merkmalen des Leergutbehälters untersucht, wobei:
• falls der Leergutbehälter als vorhergesehenes zurückzunehmendes Leergut identifiziert wird, der Leergutbehälter akzeptiert und mittels des Transportsystems (1004) in ein Lager, zu einem Sortierbereich oder zu einem Kompaktor transportiert wird;
• falls der Leergutbehälter nicht als vorhergesehenes zurückzunehmendes Leergut identifiziert oder als beschädigt erkannt wird, der Leergutbehälter nicht akzeptiert und mittels des Transportsystems (1004) wieder aus der Leergutrücknahmevorrichtung heraus transportiert wird;
• wobei der Schaltkreis vorzugsweise eingerichtet ist, die mindestens eine zusätzliche Kamera der mehreren Kameras und/oder die mindestens eine zusätzliche Lichtquelle der mehreren Lichtquellen zu deaktivieren nach Abschluss des Transportvorgangs .

3. Leergutrücknahmevorrichtung (100) gemäß Anspruch 2, wobei die Leergutrücknahmevorrichtung (100) eingerichtet ist, den Prozessor (1108) basierend auf der mittels der mindestens einen Kamera (106) erfassten Lichtmenge zu aktivieren.

4. Leergutrücknahmevorrichtung (100) gemäß einem der vorherigen Ansprüche,
wobei die mehreren Kameras (106, 108) zum Erfassen eines vollständigen durchgängigen 360°-Ringbereichs der Oberfläche des Leergutbehälters (118) eingerichtet sind.

5. Leergutrücknahmevorrichtung (100) gemäß einem der vorherigen Ansprüche,
wobei zumindest eine der mehreren Lichtquellen (110, 112) mehrere Unterlichtquellen (802, 804) aufweist.

6. Leergutrücknahmevorrichtung (100) gemäß Anspruch 5, wobei die mehreren Unterlichtquellen (802, 804) eingerichtet sind Licht in verschiedenen Spektralbereichen zu emittieren.

7. Leergutrücknahmevorrichtung (100) gemäß Anspruch 5 oder 6,
wobei der Schaltkreis (116) und/oder ein Prozessor (1108) eingerichtet sind, ein Teil der mehreren Unterlichtquellen (802, 804) zu steuern oder zu regeln.

8. Leergutrücknahmevorrichtung (100) gemäß einem der vorherigen Ansprüche, wobei der Schaltkreis (116) und/oder der Prozessor (1108) eingerichtet sind, eine Beleuchtungsstärke der mehreren Lichtquellen (110, 112) zu steuern oder zu regeln.

9. Leergutrücknahmevorrichtung (100) gemäß einem der vorherigen Ansprüche, ferner aufweisend:
zumindest ein Spiegelsystem (506, 508, 518, 520) zum Verlagern der Fokusebene von zumindest einer Kamera der mehreren Kameras (106, 108).

10. Leergutrücknahmevorrichtung (100) gemäß einem der vorherigen Ansprüche,
wobei der Prozessor (1108) eingerichtet ist, erfasste Bilder der mehreren Kameras (106, 108) zu einem Gesamt-Bild zusammenzufügen.

11. Leergutrücknahmevorrichtung (100) gemäß einem der vorherigen Ansprüche, insofern rückbezogen auf den Patentanspruch 2,
wobei das Transportsystem (1004) zum Transport eines Leergutbehälters (118) eingerichtet ist, wobei das Transportsystem (1004) und die Erfassungseinrichtung (102) voneinander beabstandet sind.

12. Leergutrücknahmevorrichtung (100) gemäß einem der vorherigen Ansprüche,
wobei die Leergutrücknahmevorrichtung (100) eingerichtet ist, die mindestens eine zusätzliche Kamera (108) der mehreren Kameras (106, 108) und/oder die mindestens eine zusätzliche Lichtquelle (112) der mehreren Lichtquellen (110, 112) mit einer Zeitverzögerung zu aktivieren.

13. Leergutrücknahmevorrichtung (100) gemäß einem der vorherigen Ansprüche,
wobei die Leergutrücknahmevorrichtung (100) derart eingerichtet ist, dass ein Leergutbehälter (118) dann zurück genommen wird, falls die veränderte Lichtmenge zumindest dauerhaft während des Erfassens der Merkmale des Leergutbehälters (118) detektiert wird.

14. Leergutrücknahmevorrichtung (100) gemäß einem der vorherigen Ansprüche,
wobei der Schaltkreis eingerichtet ist, die mindestens eine Lichtquelle der mehreren Lichtquellen (110, 112) derart anzusteuern, dass sie Licht in Form von Pulsen aussendet.

15. Leergutrücknahmevorrichtung gemäß einem der vorherigen Ansprüche, ferner aufweisend:
zumindest eine reflektierende Oberfläche, welche derart angeordnet ist, dass Licht von der mindestens einer Lichtquelle der mehrere Lichtquellen (110, 112) zumindest zweimal den Erfassungsbereich (104) passiert, bis es von der mindestens einen Kamera der mehrere Kameras (106, 108) empfangen wird.

## Claims

1. Return device (100) for empties, comprising:
an optical capturing apparatus (102) for optically capturing features of an empty container (118),
wherein the capturing apparatus (102) comprises:
• a plurality of light sources (110, 112); and
• a plurality of cameras (106, 108);
a processor configured to determine the features of the empty container, which features have been captured by means of the plurality of cameras and have been transmitted from the latter to the processor;
a circuit (116) connected to the plurality of cameras (106, 108);
• wherein the light sources (110, 112) and the cameras (106, 108) are arranged around a capturing region (104) in a horseshoe-shaped manner, with the empty container (118) being brought into said capturing region for the purposes of optically capturing the features;
• wherein at least one of the plurality of light sources (110) and at least one of the plurality of cameras (106) are arranged in such a way that the at least one camera (106) is arranged in the beam path (114) of the at least one light source (110) such that, when an empty container (118) has been brought into the capturing region (104), the at least one camera (106) captures a change in a luminous energy from the at least one light source (110) in comparison with the case where there are no empty containers (118) in the capturing region (104);
• a circuit (116) configured to activate at least one additional camera (108) of the plurality of cameras (106, 108) and/or at least one additional light source (112) of the plurality of light sources (110, 112) on the basis of the change in the luminous energy captured by means of the at least one camera (106);
• wherein the circuit is configured to deactivate the at least one additional camera of the plurality of cameras and/or the at least one additional light source of the plurality of light sources following the recognition of the features.

2. Return device (100) for empties according to Claim 1,
further comprising:
• a transporting system (1004);
wherein the processor (1108) following activation receives image data from the plurality of cameras and examines these for one or more known features of the empty container, wherein:
• should the empty container be identified as an envisaged empty to be taken back, the empty container is accepted and transported into a storage, to a sorting region or to a compactor by means of the transporting system (1004);
• should the empty container not be identified as an envisaged empty to be taken back or should the empty container be recognized as being damaged, the empty container is not accepted and transported out of the return device for empties again by means of the transporting system (1004);
• wherein the circuit is preferably configured to deactivate the at least one additional camera of the plurality of cameras and/or the at least one additional light source of the plurality of light sources following the completion of the transportation procedure.

3. Return device (100) for empties according to Claim 2,
wherein the return device (100) for empties is configured to activate the processor (1108) on the basis of the luminous energy captured by means of the at least one camera (106).

4. Return device (100) for empties according to any one of the preceding claims,
wherein the plurality of cameras (106, 108) are configured to capture a complete continuous 360° ring region of the surface of the empty container (118) .

5. Return device (100) for empties according to any one of the preceding claims,
wherein at least one of the plurality of light sources (110, 112) comprises a plurality of light sub-sources (802, 804).

6. Return device (100) for empties according to Claim 5,
wherein the plurality of light sub-sources (802, 804) are configured to emit light in different spectral regions.

7. Return device (100) for empties according to Claim 5 or 6,
wherein the circuit (116) and/or a processor (1108) are configured to control or regulate some of the plurality of light sub-sources (802, 804).

8. Return device (100) for empties according to any one of the preceding claims, wherein the circuit (116) and/or the processor (1108) are configured to control or regulate an illuminance of the plurality of light sources (110, 112).

9. Return device (100) for empties according to any one of the preceding claims, further comprising:
at least one mirror system (506, 508, 518, 520) for displacing the focal plane of at least one camera of the plurality of cameras (106, 108).

10. Return device (100) for empties according to any one of the preceding claims,
wherein the processor (1108) is configured to stitch together captured images from the plurality of cameras (106, 108) to form an overall image.

11. Return device (100) for empties according to any one of the preceding claims, to the extent this refers back to Patent Claim 2,
wherein the transporting system (1004) is configured to transport an empty container (118), wherein the transporting system (1004) and the capturing apparatus (102) are spaced apart from one another.

12. Return device (100) for empties according to any one of the preceding claims,
wherein the return device (100) for empties is configured to activate the at least one additional camera (108) of the plurality of cameras (106, 108) and/or the at least one additional light source (112) of the plurality of light sources (110, 112) with a time delay.

13. Return device (100) for empties according to any one of the preceding claims,
wherein the return device (100) for empties is configured in such a way that an empty container (118) is taken back if the modified luminous energy is detected at least in uninterrupted fashion while capturing the features of the empty container (118).

14. Return device (100) for empties according to any one of the preceding claims,
wherein the circuit is configured to actuate the at least one light source of the plurality of light sources (110, 112) in such a way that it emits light in the form of pulses.

15. Return device for empties according to any one of the preceding claims, further comprising:
at least one reflecting surface which is arranged in such a way that light from the at least one light source of the plurality of light sources (110, 112) passes through the capturing region (104) at least twice, before it is captured by the at least one camera of the plurality of cameras (106, 108).

## Revendications

1. Dispositif de reprise d'emballages consignés (100), présentant :
un moyen d'acquisition optique (102) pour l'acquisition optique des particularités d'un contenant consigné (118), le moyen d'acquisition (102) présentant :
• plusieurs sources de lumière (110, 112) ; et
• plusieurs caméras (106, 108) ;
un processeur qui est conçu pour déterminer les particularités du contenant consigné qui ont été acquises au moyen des plusieurs caméras et ont été transmises par celles-ci au processeur ;
un circuit (116) qui est relié aux plusieurs caméras (106, 108) ;
• dans lequel les sources de lumière (110, 112) et les caméras (106, 108) sont disposés en fer à cheval autour d'une zone d'acquisition (104) dans laquelle le contenant consigné (118) est amené pour l'acquisition optique des particularités ;
• dans lequel au moins l'une des plusieurs sources de lumière (110) et au moins l'une des plusieurs caméras (106) sont disposées de telle sorte que ladite au moins une caméra (106) est disposée sur la trajectoire de faisceau (114) de ladite au moins une source de lumière (110), de sorte que si un contenant consigné (118) est amené dans la zone d'acquisition (104), ladite au moins une caméra (106) acquiert une variation d'une quantité de lumière provenant de ladite au moins une source de lumière (110) en comparaison avec le cas où la zone d'acquisition (104) est exempte du contenant consigné (118) ;
• dans lequel un circuit (116) est conçu pour activer, sur la base de la variation de la quantité de lumière, acquise au moyen de ladite au moins une caméra (106), au moins une caméra supplémentaire (108) des plusieurs caméras (106, 108) et/ou au moins une source de lumière supplémentaire (112) des plusieurs sources de lumière (110, 112) ;
• dans lequel le circuit est conçu pour désactiver ladite au moins une caméra supplémentaire des plusieurs caméras et/ou ladite au moins une source de lumière supplémentaire des plusieurs sources de lumière après l'acquisition des particularités.

2. Dispositif de reprise d'emballages consignés (100) selon la revendication 1, présentant en outre :
• un système de transport (1004) ;
dans lequel le processeur (1108), après l'activation, reçoit des données d'image des plusieurs caméras et les examine quant à une ou plusieurs particularités connues du contenant consigné, dans lequel:
• si le contenant consigné est identifié comme un emballage consigné à reprendre prévu, le contenant consigné est accepté et transporté au moyen du système de transport (1004) dans un entrepôt, jusqu'à une zone de tri ou jusqu'à un compacteur ;
• si le contenant consigné n'est pas identifié comme un emballage consigné à reprendre prévu ou est identifié comme étant endommagé, le contenant consigné n'est pas accepté et ressorti du dispositif de reprise d'emballages consignés au moyen du système de transport (1004) ;
• dans lequel le circuit est de préférence conçu pour désactiver ladite au moins une caméra supplémentaire des plusieurs caméras et/ou ladite au moins une source de lumière supplémentaire des plusieurs sources de lumière à l'issue du processus de transport.

3. Dispositif de reprise d'emballages consignés (100) selon la revendication 2, dans lequel le dispositif de reprise d'emballages consignés (100) est conçu pour activer le processeur (1108) sur la base de la quantité de lumière acquise au moyen de ladite au moins une caméra (106).

4. Dispositif de reprise d'emballages consignés (100) selon l'une quelconque des revendications précédentes, dans lequel les plusieurs caméras (106, 108) sont conçues pour acquérir une zone annulaire sur 360° continue et complète de la surface du contenant consigné (118).

5. Dispositif de reprise d'emballages consignés (100) selon l'une quelconque des revendications précédentes, dans lequel au moins l'une des plusieurs sources de lumière (110, 112) présente plusieurs sources de lumière secondaires (802, 804).

6. Dispositif de reprise d'emballages consignés (100) selon la revendication 5, dans lequel les plusieurs sources de lumière secondaires (802, 804) sont conçues pour émettre la lumière dans différentes gammes spectrales.

7. Dispositif de reprise d'emballages consignés (100) selon la revendication 5 ou 6, dans lequel le circuit (116) et/ou un processeur (1108) est/sont conçu(s) pour commander ou réguler une partie des plusieurs sources de lumière secondaires (802, 804).

8. Dispositif de reprise d'emballages consignés (100) selon l'une quelconque des revendications précédentes, dans lequel le circuit (116) et/ou le processeur (1108) sont conçus pour commander ou réguler une intensité d'éclairage des plusieurs sources de lumière (110, 112) .

9. Dispositif de reprise d'emballages consignés (100) selon l'une quelconque des revendications précédentes, présentant en outre :
au moins un système de miroirs (506, 508, 518, 520) pour décaler le plan focal d'au moins une caméra des plusieurs caméras (106, 108).

10. Dispositif de reprise d'emballages consignés (100) selon l'une quelconque des revendications précédentes, dans lequel le processeur (1108) est conçu pour assembler en une image globale des images acquises provenant des plusieurs caméras (106, 108).

11. Dispositif de reprise d'emballages consignés (100) selon l'une quelconque des revendications précédentes, dans la mesure où elle se réfère à la revendication 2, dans lequel le système de transport (1004) est conçu pour transporter un contenant consigné (118), le système de transport (1004) et le moyen d'acquisition (102) étant espacés l'un de l'autre.

12. Dispositif de reprise d'emballages consignés (100) selon l'une quelconque des revendications précédentes, dans lequel le dispositif de reprise d'emballages consignés (100) est conçu pour activer ladite au moins une caméra supplémentaire (108) des plusieurs caméras (106, 108) et/ou ladite au moins une source de lumière supplémentaire (112) des plusieurs sources de lumière (110, 112) avec une temporisation.

13. Dispositif de reprise d'emballages consignés (100) selon l'une quelconque des revendications précédentes, dans lequel le dispositif de reprise d'emballages consignés (100) est conçu de telle sorte qu'un contenant consigné (118) est repris si la quantité de lumière modifiée est détectée au moins en permanence pendant l'acquisition des particularités du contenant consigné (118).

14. Dispositif de reprise d'emballages consignés (100) selon l'une quelconque des revendications précédentes, dans lequel le circuit est conçu pour piloter ladite au moins une source de lumière des plusieurs sources de lumière (110, 112) de telle sorte qu'elle émet la lumière sous forme d'impulsions.

15. Dispositif de reprise d'emballages consignés selon l'une quelconque des revendications précédentes, présentant en outre :
au moins une surface réfléchissante qui est disposée de telle sorte que la lumière provenant de ladite au moins une source de lumière des plusieurs sources de lumière (110, 112) passe au moins deux fois par la zone d'acquisition (104) jusqu'à ce qu'elle soit reçue par ladite au moins une caméra des plusieurs (106, 108).
